**Europäisches Patentamt**

(19) **European Patent Office**

**Office européen des brevets**

(11) Publication number: **0 141 028**
**B1**

(12) **EUROPEAN PATENT SPECIFICATION**

(45) Date of publication of patent specification: **06.06.90**

(21) Application number: **84107390.1**

(22) Date of filing: **27.06.84**

(51) Int. Cl.⁵: **G 11 B 20/14** // H04L25/49

(54) **Digital apparatus for magnetic media data recovery system.**

| | |
|---|---|
| (30) Priority: **25.10.83 IT 2341183** | (73) Proprietor: **BULL HN INFORMATION SYSTEMS ITALIA S.p.A.**<br>**Via Martiri d'Italia 3**<br>**I-10014 Caluso (Torino) (IT)** |
| (43) Date of publication of application:<br>**15.05.85 Bulletin 85/20** | |
| (45) Publication of the grant of the patent:<br>**06.06.90 Bulletin 90/23** | (72) Inventor: **Troletti, Bonifacio**<br>**Via Colture 31 A**<br>**Boario Terme (BS) (IT)** |
| (84) Designated Contracting States:<br>**BE CH DE FR GB LI NL SE** | (56) References cited:<br>**PATENT ABSTRACTS OF JAPAN, vol. 6, no. 140 (E-121)1018r, 29th July 1982; & JP-A-57 63 957 (HITACHI SEISAKUSHO K.K.) 17-04-1982** |
| (56) References cited:<br>**EP-A-0 012 880**<br>**EP-A-0 034 055**<br>**DE-A-2 234 203**<br>**FR-A-2 217 757**<br>**GB-A-2 049 370**<br>**GB-A-2 080 658**<br>**US-A-3 864 735**<br>**US-A-4 344 039**<br><br>**PATENT ABSTRACTS OF JAPAN, vol. 6, no. 116 (P-125)994r, 29th June 1982; & JP-A-57 44 233 (MATSUSHITA DENKI SANGYO K.K.) 12-03-1982** | |

Courier Press, Leamington Spa, England.

**Description**

The present invention relates to a digital apparatus for the recovery of binary information recorded on magnetical supports, such as disks, diskettes, tapes.

Among the methods of binary information recording on magnetical supports, the most used ones are frequency modulation (FM) also known as simple density and modified frequency modulation (MFM) or double density.

Subsequent bits 1 or 0 recorded in FM are identified, when read out, owing to the presence or the lack, respectively, of a pulse in the center of contiguous recording cells.

Each cell is defined by two timing pulses, the first one defining the beginning of the cell and the second one defining the beginning of the subsequent one.

The time interval related to a cell varies according to the used media.

For instance, in the case of 8" (eight inches) diskette and FM recording, the cell has a nominal length of 4 μsec, therefore the nominal time intervals between two subsequent pulses may be of 2 μsec. or 4 μsec.

In case of MFM recording too, subsequent bits 1 or 0 are identified, when read out, owing to the presence or the lack respectively of a pulse in the center of contiguous cells.

However, differently from the FM recording, the MFM recording is such that the timing pulse, defining the beginning of a cell, is lacking if in the center of such cell or of the preceding one the pulse related to information bit 1 is present.

For MFM too the time interval related to the cell depends on the recording media.

For instance, in the case of an 8" diskette and MFM recording, the nominal length of the cell is 2 μsec and therefore the nominal interval time between two subsequent pulses can be 2, 3, 4 μsec.

Further information on FM and MFM recordding methods can be found in the document GA 21-9257-1 of IBM entitled "IBM Two Side Diskette Original Equipment Manufacturers Information—Second edition" (November 1977).

The pulse sequence read out from the magnetical support is applied to the input of a recovering system which supplies in output the binary information related to the inputted sequence.

Such pulse sequence periodically has a so-called synchronization field (generally of 6 or 12 bytes), that is a predetermined number of pulses related to a plurality of contiguous cells where all "1" information bits or all "0" information bits have been recorded. The synchronization field is used by the recovery system for locking and for establishing if a determined pulse in input is a timing one or a pulse related to the recorded information bit.

The recovery system is therefore able to correctly detect the information recorded on the magnetical support on the basis of the time interval between two subsequent pulses and of the nature of such pulses.

Unfortunately the data recovery through the only measurement of the time interval between subsequent pulses is not reliable as such interval may present a substantial difference from its nominal value and the pulse sequence can be misinterpreted in the recovery phase.

Such difference is determined by two main causes.

The first one is due to speed changes of the magnetic support, that is to the rotational speed tolerances and the motor which drives the magnetical support.

The second one is due to the so-called phenomenon of peak-shift of the recorded pulse, well known in the art, such shift being especially due to the mutual influence of adjacent pulses.

As known (see for instance GB—A—2080658) such shift can be considered nul only if the recorded pulse density is constant, that is if the interval between subsequent pulses is always equal.

Clearly such situation does not verify in FM and MFM recording except in the synchronization field.

In the apparatus according to GB—A—2080658 this absence of peak shift during the synchronization fields is used to obtain a correction value for speed errors.

The recovery system therefore need apparatuses able to correct for such error causes.

The most known of these apparatuses are the ones which make use of phase lock circuits.

They receive the pulse sequence in input and they supply, in output, a so-called square wave window signal continuously synchronized with the input pulses.

In other words the window signal is modified in order to maintain a preestablished phase relation with the input pulses.

The window signal and the pulse signal are then applied to a logical network of the recovery system and suitably decoded.

A reading pulse occurring when the window signal is at a first electrical level is interpreted as information bit.

A reading pulse occurring when the window signal is at a second electrical level is interpreted as timing pulse.

The phase lock apparatuses generally comprise a phase comparator receiving in input the pulse sequence and the window signal and supplying, in output, a signal proportional to their phase difference.

Such signal is applied, through suitable filters, to a voltage controlled oscillator (VCO) generating the window signal.

These apparatuses, besides requiring frequent and expensive trimming are often affected by stability problems. Digital phase lock apparatuses have been recently suggested to overcome such inconvenients.

For instance US Patent No. 4,357,707 discloses a digital phase lock apparatus to be used together with a diskette digital controller for recovervng information recorded both in FM and in MFM.

According to such patent the nominal interval between two window signal transitions is given by the sum of a variable number of periods of a timing signal with fixed frequency.

The circuit counts the number of timing signal periods occurring between the last window signal transition and the instant in which the next following read out pulse is received.

Based on such information it changes the position of the subsequent window signal transition in order that the read out pulse tend to be centered between the two window signal transitions.

In case of MFM recording, the apparatus disclosed in the mentioned patent varies the length of the interval between two window signal transitions, owing to the reception of a nth pulse, not only taking in account the interval, between the last transition of the window signal and such nth pulse, but also the interval between the $(n-1)^{th}$ pulse and the window signal transition immediately preceding such $(n-1)^{th}$ pulse.

In such way the apparatus disclosed in the above mentioned patent tries to recover the error due to the "peak shift" phenomenon which especially affects the MFM recording.

Besides the apparatus in US Patent No. 4,357,707 attempts to recover the error due to the magnetical support speed variation.

Practically it continuously verifies whether each pulse of a plurality of pulses in input is early or late as to its nominal position, increments or decrements accordingly a counter and modify the number of timing periods defining the nominal interval between two window signal transitions depending on the status of such counter. The apparatus disclosed in the above mentioned US Patent, besides requiring the use of high performance components, intrinsecally expensive (such as control memory with minimum access time) is affected by several limitations in the recovery of MFM recorded binary information.

In fact though the recovery of the errors due to speed changes and to the "peak shift" phenomenon is carried out by independent circuits, such circuits are responsive to a pulse train where these errors are jointly present and adds each other.

It is therefore clear that recovery of the error due to the speed variation is affected by the "peak shift" phenomenon as well as the recovery of the error due to the "peak shift" phenomenon is affected by the magnetical support speed error.

Therefore a correct phase relation between window signal and the read out pulse train is not assured.

Besides, though supposing a correct recovery of the error due to speed variation, the circuit disclosed in U.S. Patent No. 4,357,707 is able to recover errors due to the peak shift phenomenon whose maximum entity is often lesser than the one which may actually occur.

As the peak shift recovery is concerned, it must be added that the mentioned circuit tends to propagate the indetermination error or measurement uncertainty, affecting the measurement of the interval between a pulse and the previous window signal transition, to the subsequent intervals.

The apparatus according to GB—A—2080658 uses a ROM for the corrections of speed errors using data recovered during synchronization fields and for the correction of peak shifts using current data and immediately previous data.

The digital apparatus according to the present invention as defined in appended Claim 1 overcomes such inconvenients.

According to a first aspect of the invention the apparatus firstly measures the time interval between the last and the last but one read out pulse. Thereafter, from such measurement it recovers the error due to the speed variation and to the peak shift phenomenon and, finally, it generates the window signal and produces a last read out pulse in correct phase relation as to the window signal.

According to a further aspect of the invention, the digital phase lock recovers the error due to the rotational speed variation and to the peak shift phenomenon during two separated phases, so avoiding that the recovery of the error due to the speed variation can be affected by the error due to the peak shift phenomenon. During the recovery phase of the error due to the speed variation a quantity representative of the rotational speed error is added to or deducted from the duration measurement of the last detected interval.

Such quantity is not fixed but is updated each time the apparatus detects a suitable number of subsequent pulses having a constant recording density and therefore not affected by peak shift error. Subsequently to the recovery of the error due to the speed variations, the apparatus of the present invention analyses the duration measurement of the last interval and, according to such measurement, determines the nominal length to be associated to the last interval. In the case of recovery of MFM recorded data, the apparatus determines the nominal length to be coupled to the last interval by additionally taking in account the measurement of the last but one interval duration, the nominal duration associated to the last but one interval and the nominal duration associated to the last but third interval.

The so effected recovery of the error due to the peak shift phenomenon avoids that the indetermination error present in the length measurement of an interval can propagate and affect the determination of the nominal length to be associated to the subsequent intervals, and it further allows the recovery of peak shift errors within a wide range of possible values.

These and other features of the invention will appear more clearly from the following description of a preferred embodiment of the invention and from the enclosed drawings where:

Figure 1 shows in block diagram a typical data processing system comprising the digital apparatus of the present invention.

Figure 2 shows in block diagram the digital apparatus of the present invention.

Figures 3, 4, 5 show in detail the timing unit, the measuring unit, and the speed error detection unit respectively of the digital apparatus of Figure 2.

Figure 6 shows in timing diagram the signals present in some points of the circuits of Figures 3, 4, 5.

Figure 7 shows in detail the speed and peak shift error compensation units of the apparatus of Figure 2.

Figures 8, 9, 10 show, with reference to the recovery of MFM recorded information, the mapping of a memory included in the peak shift compensation unit of Figure 7.

Figure 11 shows in detail the regenerating unit of the digital apparatus in Figure 2.

Figure 12 shows in timing diagram the signals present in some points of the circuit in Figure 11.

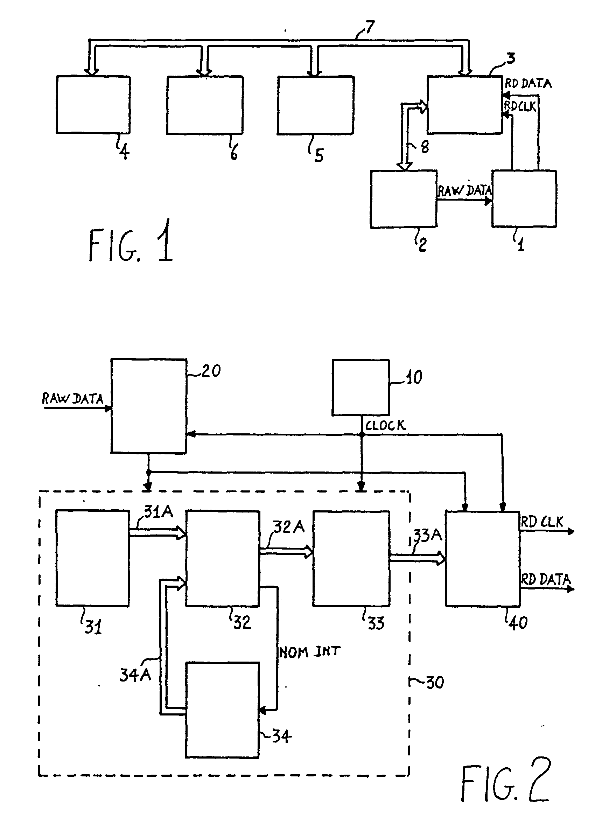

Figure 1 shows in block diagram a typical data processing system comprising the digital apparatus of the present invention.

Such apparatus, indicated by reference number 1, is assembled between a mass storage driving device 2 and a controller 3.

The system of Figure 1 further comprises a central processor 4, a peripheral controller 5 and a central memory 6.

Central processor 4, memory 6 and controllers 3, 5 are connected by means of a plurality of leads or system bus 7 through which data, addresses and control signals can be exchanged. In the present description the system mass storage is supposed to be constituted by an 8″ diskette.

The considerations made in the following will be however, valid for other kind of storages too, as for instance magnetical tape storages. Supposing that the mass storage is constituted by a diskette, an integrated circuit (as for instance the one marketed by US firm Western Digital with code 1791) can be used as controller 3.

Controller 3 and driving device 2 can exchange a plurality of control and information signals through channel 8.

A detailed description is omitted of the circuits and interface signals between controller 3 and device 2 as it is not essential for the present invention understanding.

In the case of the preferred described embodiment, as a 8″ diskette is used as mass storage and Western Digital integrated circuit 1791 as controller, the mentioned circuits and interface signals can be deduced from the specifications of such products.

The same remarks are valid for the interface between controller 3 and recovery apparatus 1.

Here it is only pointed out that the recovery apparatus must supply the controller with a square wave window signal RD CLK and with a pulse train RD DATA at logical level 0, each pulse corresponding to a magnetic flux transition detected on recording support.

Pulses RD DATA and the window signal RD CLK have only to fulfil the condition that each pulse RD DATA be entirely comprised within a half wave (or window) of signal RD CLK.

For the rest the pulse position relative to the window signal and the pulse length can be arbitrary, though, in preference, the length of a pulse RD DATA should range from 100 to 250 nsec., and the delay of a pulse beginning or termination, as to the window signal transition, should be longer than 40 nsec.

Controller 3 does not need to be informed if each of the pulses RD DATA corresponds to a timing transition or to a datum.

The controller itself is able to make such distinction according to the pattern read out in correspondence of the well known synchronization and "address mark" fields.

Also the period of the timing or window signal can be variable and the two signal half waves may have a different length the one from the other.

Device 2 supplies digital apparatus 1 with a pulse RAW DATA in correspondence of each detected magnetic flux transition.

As the disclosed system is intended to recover FM and MFM recorded information, the time intervals between subsequent pulses RAW DATA are indicative of such information.

Apparatus 1, according to the pulse train RAW DATA received in input supplies controller 3 with the window signal RD CLK and with the pulses RD DATA corresponding to the pulses RAW DATA and suitably positioned relative to window signal RD CLK.

Controller 3, thanks to signal RD CLK, discriminates the information bits within the pulse train RD DATA and makes them available, with an established parallelism, on system bus 7.

Figure 2 shows, in block diagram, the digital apparatus 1 of Figure 1 which is the object of the present invention.

Essentially apparatus 1 comprises an oscillator 10, a timing unit 20, a logical unit 30 for the measurement of the interval duration between subsequent input pulses and the recovery of possible errors present in such interval duration due to the speed variations and to the peak shift phenomenon, a logical unit 40 for reconstruction of the read pulse train RD DATA and for generation of window signal RD CLK. Oscillator 10 supplies units 20, 30, 40 with a square wave signal CLOCK having a 16 MHz frequency.

Timing unit 20 is activated by each of the pulses RAW DATA and supplies one or more timing signals to units 30, 40 in order to control and synchronize their operation.

Figure 2 shows that unit 30 is constituted by a logical unit 31 for measurement of the interval duration, a logical unit 32 for the compensation of the error due to speed variation, a logical unit 33 for the compensation of the error due to the "peak shift" phenomenon and a logical unit 34 determining the rotational speed variation.

Unit 31, in correspondence with the rising edge of pulse RAW DATA supplies, on output channel 31A, a first information indicative of the interval duration between such rising edge and the one of the preceding pulse RAW DATA.

Such first information is clearly affected by the errors due to the speed variation and to the "peak-shift" phenomenon.

Compensation unit 32 sums to or subtracts from the first information on channel 31A a second information available on output channel 34A of unit 34, said second information being indicative of the speed error. On output channel 32A of logical compensation unit 32 a third information is thus present, indicative of the last interval duration where the error due to the speed variation has been recovered.

On a further output of unit 32 a control signal NOM INT is also available indicating, when present at a first logical level, that the binary information in output from unit 31 is representative of an interval whose duration differs from a prefixed nominal duration, for instance 2 μsec in MFM or 4 μsec in FM, no more than a prefixed value.

Unit 34 receives signal NOM INT and, if such signal is active for a certain number of subsequent intervals, the unit 34 arranges the updating of the information indicative of the detected error speed and makes it available on output channel 34A.

The information in output from unit 32, indicative of the last interval duration (said duration being only affected by the "peak shift" error), is sent to compensation unit 33.

In case of FM recording unit 33 determines from such information the last interval nominal duration and supplies logical unit 40, through channel 33A, with a digital information specifying whether signals RD CLK and RD DATA to be generated are related to an interval of nominal duration of 2 or 4 μsec.

In case of MFM recording unit 33 determines the last interval nominal duration from the information in output from unit 32 and from the previously received information, indicative of the last but one interval duration, of the nominal duration associated to such last but one interval and of the nominal duration associated to the last but two interval.

The last interval nominal duration, which may be 2, 3, 4 μsec is supplied to logical unit 40, through channel 33A.

Unit 40 generates RD CLK window and RD DATA signal in accordance with such nominal duration.

As unit 40 could receive from unit 33 information indicative of the last interval while the generation of signals RD CLK and RD DATA related to the previous interval is still outstanding, it is provided with means able to avoid such information loss.

This will appear clearer from the detailed description of unit 40 which will follow.

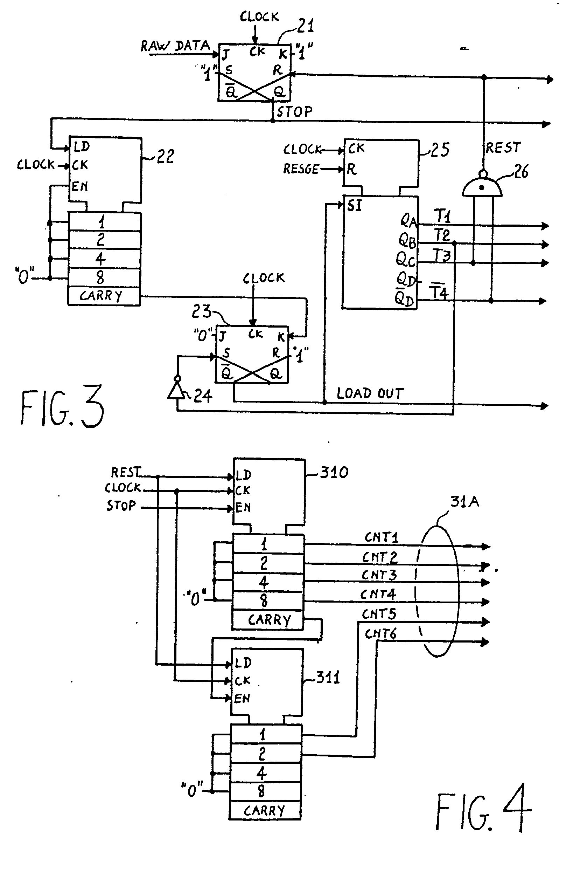

Figure 3 shows in detail logical timing unit 20.

It comprises two J, K flip-flops 21, 23 a 4 bit counter 22, a 4 bit shift register 25, a 2 input NAND gate 26 and a NOT gate 24.

In Figure 3, as well as in the subsequent figures, only the circuit inputs useful for the invention understanding are shown.

At the end of the present description a list of the used circuits will be supplied.

From these circuit specifications and from the operations they are designed to perform within the invention apparatus a person skilled in the art can easily deduce which is the logical level to be applied to the circuit inputs not shown in the Figures.

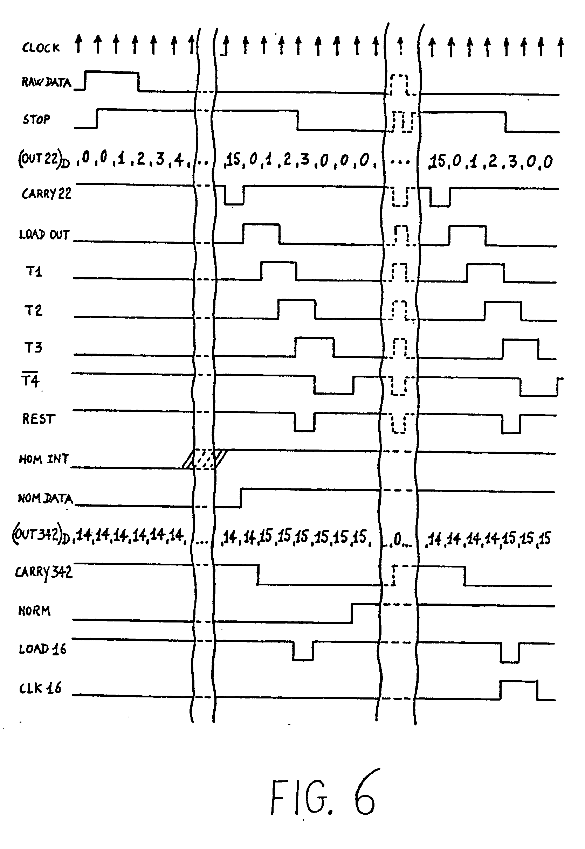

Further, Figure 6 shows in timing diagram the signal present in some points of the circuits of Figures 3, 4 and 5 and facilitate the understanding of their operation.

In order to simplify the following description, the essential characteristics of some logical elements shown in the figures are reminded. All J, K flip-flops shown herein are of the kind triggered by the positive edge of a signal applied to clock input CK. Such edge sets them or keeps them in set if the logical level on their inputs J, K is 1, 1 respectively. They are reset/kept in reset if the logical level on inputs J, K is 0, 0 respectively. They toggle if the logical level on inputs J, K is 1, 0 respectively. They do not toggle if the logical level on inputs J, K is 0, 1 respectively.

The set and reset inputs must be at logical level 1.

These flip-flops are set, reset in an asynchronous way when a logical level 0 is applied to set, reset input respectively.

4 bit counters are of the kind triggered by the positive edge of a signal applied to clock input CK and are provided wth a load input LD, an enabling input EN and data inputs.

When a logical level 1 is applied to input LD they increment at each timing pulse if the logical level at input EN is 0.

If EN=1 they do not increment.

When a logical level 0 is applied to input LD, they are loaded by a timing pulse with the information present on the data inputs, independently from the logical level on input EN.

The counters have a CARRY output which, normally at logical level 1, falls to 0 when the counter is in the status of maximum count (that is 15).

Referring again to Figure 3, flip-flop 21 receives signal CLOCK with a 16 MHz frequency at the clock input, signal RAW DATA, in an asynchronous way, at the J input and signal REST at the reset input. (Diagram CLOCK, RAW DATA, REST of Figure 6).

Set input and K input of flip-flop 21 receive a signal permanently at logical level 1.

On output Q of flip-flop 21 a signal STOP rises to logical level 1 with the rising edge of CLOCK if RAW DATA is at logical level 1.

Then signal STOP falls to logical level 0 when signal REST falls to logical level 0. Signal STOP is sent to unit 30 of Figure 2.

It is further applied to load input LD of counter 22 which receives signal CLOCK on its clock input CK.

A signal at logical level 0 is permanently applied to enabling input EN and to data input of counter 22.

Therefore, the counter is normally in rest when the count status is 0.

When signal STOP rises to logical level 1, counter 22 increments by one unit its output at each rising edge of signal CLOCK.

Output CARRY of counter 22 falls to logical level 0 after a time period corresponding to the reception of 15 CLOCK pulses.

Such output is connected to flip-flop 23 K input.

Flip-flop 23 receives the clock signal at the clock input and a signal $\overline{T2}$ at the set input.

$\overline{T2}$ is obtained by inverting a signal T2 through NOT gate 24.

A signal at logical level 1 and 0 is respectively applied to the reset input and to the J input of flip-flop 23.

Flip-flop 23 delivers a signal LOAD OUT on its inverted output $\overline{Q}$. Signal LOAD OUT rises from logical level 0 to logical level 1 with the rising edge of the CLOCK pulse subsequent to the one which lowered output CARRY of counter 22 to logical level 0.

The signal LOAD OUT falls again to logical level 0 when signal $\overline{T2}$ falls to logical level 0.

Signal LOAD OUT is sent to units 30, 40 of Figure 2.

It is further applied to serial input (SI) of shift register 25 which receives the CLOCK signal on its timing input CK and a signal RESGE on its reset input R. RESGE falls to logical level 0 only during the initializing reset phase of the apparatus.

Logical level 1 of signal LOAD OUT is transferred to output QA of shift register 25 with the rising edge of the CLOCK signal subsequent to the one which rose signal LOAD OUT to logical level 1.

With the following CLOCK pulses, level 1 is shifted to outputs QB, QC of shift register 25 and to output $\overline{QD}$ in inverted form.

On such outputs timing signals T1, T2, T3, T4 (Diagram T1, T2, T3, T4 of Figure 6) are therefore present respectively.

Such timing signals are sent to unit 30 of Figure 2.

Besides, signal T2 resets flip-flop 23 through NOT 24, while signals T3, $\overline{T4}$ are applied to the inputs of NAND gate 26.

A signal REST is present on the output of such NAND gate 26 which, among other things, resets flip-flop 21.

From Figure 3 and 6 it can be noted that, as the CLOCK signal frequency is equal to 16 MHz (that is the signal period is equal to 62,5 nsec) LOAD OUT signal rises to logical level 1 with a delay equal to $16 \times 62,5 = 1000$ nsec. as to the instnat when signal STOP, indicative of the arrival of a pulse RAW DATA, rises to logical level 1.

In short timing unit 20 is activated by the reception of a read out pulse RAW DATA in synchronism with the next occurring CLOCK pulse and it supplies suitable timing signals STOP, LOAD OUT, T1,...$\overline{T4}$, REST of preestablished duration multiple of the CLOCK period.

Figure 4 shows in detail the measurement unit 31 of Figure 2.

It substantially consists of 2 counters 310, 311 having 4 bits suitably connected in cascade in order to constitute an 8 bit counter where the 4 bits supplied by counter 311 are the most significative ones.

To this purpose signals CLOCK and REST are received by the timing input CK and by the load input LD of both counters 310, 311.

Counter 310 enabling input EN receives signal STOP while the one of counter 311 is connected to the output CARRY of counter 310.

Each of the data inputs of counters 310, 311 receives a signal permanently at logical level 0 so as to be reset when loaded, that is at the occurrence of a rising edge of CLOCK signal with LD input at logical level 0.

The two most significant outputs of counter 311 are not used.

Examining Figure 4 and 6 it can be noted that the counter (310, 311) is reset, when REST is at logical level 0, by the rising edge of CLOCK, that is with a delay of $20 \times 62,5 = 1250$ nsec. as to the instant when signal STOP, indicative of a RAW DATA pulse reception, rises to logical level 1.

Thereafter the counter begins to increment at each CLOCK rising edge until signal STOP, already fallen to 0, rises again to 1 so signifying a new RAW DATA pulse reception.

At this point counters 310, 311 stop.

It is therefore clear that signals CNT1,...CNT6, in output from counters 310, 311, indicate in binary code and for multiples of 62,5 nsec, the time interval duration measured between the last and the last but one RAW DATA pulse received, less 1250 nsec.

Thus, for instance, the binary code corresponding to decimal number N (with $0 \leqslant N \leqslant 63$) in output from

6

counter 310, 311 means a time interval measured between two subsequent RAW DATA pulses equal to 1250+N · 62,5 nsec.

Such information is available for the whole time in which timing signal STOP stays at logical level 1 and for the immediately subsequent CLOCK period.

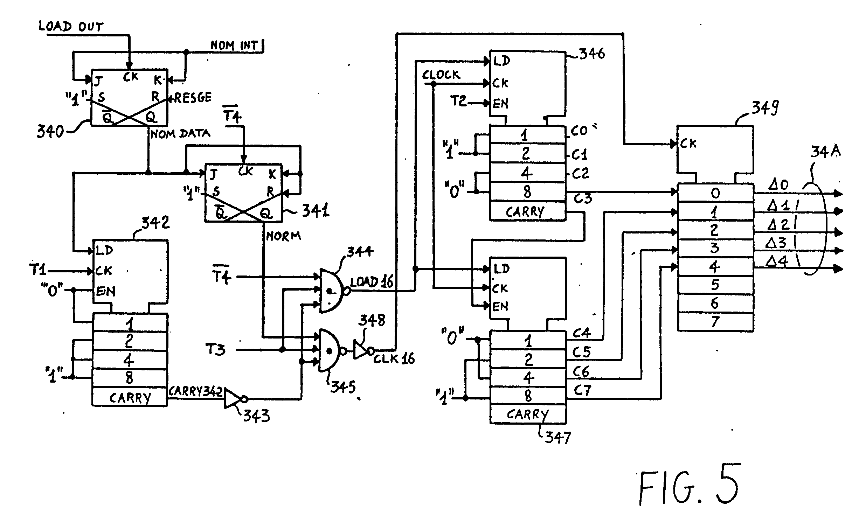

Figure 5 shows in detail logical unit 34 detecting the speed variation that is the speed error as to the nominal one.

It consistes of 2 J, K flip-flops 340, 341, 34 bits counters 342, 346, 347, a register 349, 2 three input NAND gates 344, 345, 2 NOT gates 343, 348.

Unit 34 has to operate only during the reading of preestablished fields recorded on the magnetical support, where the pulses are not affected by "peak shift" errors but only by speed errors.

In the following such fields will be named "activation field" for unit 34.

As already mentioned the signal NOM INT rises to logical level 1 each time the interval between two subsequent RAW DATA pulses (in the following named "interval") differs from a nominal interval of 2 μsec. in MFM and 4 μsec. in FM, for a value not greater than a preestablished one, for instance ±12%.

If this condition is maintained for a train of 17 measured intervals, these intervals identify a unit 34 activation field.

Counter 342 and flip-flop 340, 341 constitute a network which verifies the persistence of the NOM INT condition for 17 intervals.

Counters 346, 347 constitute a network measuring the difference between the actual duration of 16 of such 17 intervals (the first of such 17 intervals is omitted as certainly affected by peak shift error) and the duration of 16 subsequent nominal intervals.

The measured difference is recorded into register 349 which is updated at each new difference measurement effected in correspondence of an activation field.

Flip-flop 340 receives on its timing input the signal LOAD OUT, on its input J, K the signal NOM INT and on its reset input the reset signal RESGE.

A signal permanently at logical level 1 is applied to the set input of flip-flop 340.

A signal NOM DATA, present on the direct output Q of flip-flop 340, rises to logical level 1 with the rising edge of signal LOAD OUT if signal NOM INT is at logical level 1.

The signal NOM DATA is applied to the load input LD of counter 342 which receives the signal T1 on its timing input and a signal permanently at logic level 0 on its enabling input.

Each of counter 342 data input receives a suitable logical level 0 or 1 in order that, at the rising edge of T1 and with signal NOM DATA at logical level 0, the counter is set at a binary value corresponding to decimal number 14.

Signal NOM DATA is further applied to inputs J, K and to the reset input of flip-flop 341.

Such flip-flop receives signal $\overline{T4}$ on its timing input and a signal permanently at logical level 1 on its set input.

Counte 342 and flip-flop 340, 341 operation is the following.

When NOM INT is at logical level 0, at the timing pulse LOAD OUT flip-flop 340 is reset or kept in reset and, therefore, the logical level of signal NOM DATA at the output Q of flip-flop 34 is 0.

Correspondingly, at the reception of timing pulses T1 (one for each interval between RAW DATA pulses) counter 341 is set to the binary value equivalent to number 14 and it does not increment.

Output CARRY of counter 342 stays at logical level 1.

If NOM DATA is at logical level 0 such flip-flop 341 too is periodically confirmed in reset status by the rising edge of pulse $\overline{T4}$ and the signal NORM at the direct output of such flip-flop is at logical level 0.

On the contrary, if NOM DATA rises to logical level 1 flip-flop 340 is set by the subsequent rising edge of LOAD OUT and counter 342 is enabled to increment.

Counter 342 is put in a status indicative of decimal value 15 by the immediately subsequent T1 rising edge and CARRY 342 output of counter falls to logical level 0.

Straight after flip-flop 341 too is set by the rising edge of signal $\overline{T4}$ and signal NORM rises to logical level 1.

If signal NOM INT is kept at logical level 1 for further 16 subsequent intervals, that is during further 16 subsequent rising edges of signal LOAD OUT, signal NORM stays at logical level 1 for all those further 16 intervals and counter 342 goes on incrementing at the reception of each pulse T1.

In other words with the second pulse T1 the counter becomes representative of numeric value 0 and signal CARRY 342 rises to 1.

With the third pulse T1 the counter becomes representative of the numeric value 1 and so on.

With the seventeenth pulse T1 the counter become representative of the numeric value 15 and signal CARRY 342 falls again to 0.

Figure 6 shows in timing diagram signals NOM DATA, NORM, and CARRY 342 in the case that NOM INT is kept at logical level 1 for 17 interval at least.

If this does not occur flip-flops 340, 341 are reset and counter 342 goes to the status corresponding to numeric value 14.

Signal CARRY 342 and NORM control the operation of counters 346, 347 and register 349.

The signal NORM is applied to a first input of NAND gate 345 which respectively receives, on the other two inputs, signal T3 and, through NOT gate 343, the signal present on the output CARRY of counter 342.

7

EP 0 141 028 B1

Signal T3 and the signal present on the output of NOT gate 343 are also respectively applied to two inputs of NAND gate 344 which receives, on a third input, signal $\overline{T4}$.

The output of NAND gate 344 supplies a LOAD 16 signal which falls to 0 for a CLOCK period duration with the rising edge of T3, a first time after the acknowledgement of a first nominal interval (NOM INT=1) and a second time if 17 subsequent nominal intervals are detected.

NAND gate 345 output is connected to the input of NOT gate 348 which supplies in output a signal CLK 16.

Signal CLK 16 is normally at 0 and rises to level 1, for the duration of two CLOCK periods, with signal T3 only after that 17 subsequent nominal intervals have been detected.

Signal LOAD 16 is applied to load inputs LD of 4 bit counters 346, 347 which receive signal CLOCK on their timing input.

Such counters are cascade connected in order to constitute a 8 bit counter where the most significant 4 bits are the ones of counter 347. To this purpose the enabling input of counter 347 is connected to the output CARRY of counter 346.

The enabling input EN of counter 346 receives signal T2.

Each of counters 346, 347 data inputs receives a suitable level 0 or 1 in order that they may be preset at decimal count value 163 with rising edge of CLOCK signal when signal LOAD 16 is at logical level 0.

The counter content is then incremented by one at each rising edge of CLOCK signal when signal T2 is at logical level 0.

Outputs C4+C7 of counter 347 and the output C3 of counter 346 are connected to as many inputs of the latching register 349 which receives on its clock input T signal CLK 16.

At the rising edge of signal CLK 16 register 349 latches and makes the information present on its inputs available on its outputs as signal $\Delta0+\Delta4$.

In other words counters 346, 347 operation is the following.

Signal LOAD 16 falls to 0 after acknowledging of a first interval whose actual length differs from a preestablished nominal duration no more than a certain per cent value.

Signal LOAD 16 falling to 0 causes the loading of counters 346, 347 which, straight after, as T2 is at 0, start to increment at each positive edge of signal CLOCK.

During the CLOCK periods of each interval between RAW DATA pulses when T2 is at 1, that is for the duration of 2 CLOCK periods corresponding to 125 nsec. incrementation is skipped.

The count stop of counters 346, 347 is necessary to assure a stable configuration on such counter outputs at the rising edge of CLK 16.

Counters 346, 347 therefore count the CLOCK pulses contained in an interval between two RAW DATA pulses less 2 pulses, that is 125 nsec. If NOM INT is kept at 1 for further 16 intervals at least, the counters continue to increment.

After the detection of the seventeenth subsequent interval for which NOM INT=1, the rising edge of CLK 16 causes the loading in register 349 of the status reached by the counters and, straight after, as LOAD 16 is fallen to 0, these are preset at decimal count value 163 by CLOCK signal.

The information ($\Delta0+\Delta4$) available on output channel 34A of unit 34 expresses in coded way the speed error as to its nominal value. In fact, indicating with T0 the time interval corresponding to 16 of the 17 subsequent measured intervals to which intervals correspond a nominal duration of 2 µsec in MFM or 4 µsec in FM (NOM INT=1), the number of signal CLOCK periods within interval T0 changes according to the speed error.

In MFM, in the case the speed variation is of +12,5% or of −12,5%, the interval T0 will be equal to 16×1,750=28 µsec or to 16×2,250=36 µsec. which corresponds to 448 or to 576 periods of CLOCK signal respectively. In FM in the case the speed variation is of +12,5% or of −11,7%, the interval T0 will be equal to 16×3,500=56 µsec or to 16×4,468=71,48 µsec corresponding to 896 or to 1144 periods of CLOCK signal respectively. Considering that signal T2 masks 2 rising edges of signal CLOCK and assuming an allowable speed variation ranging from +12,5% to −12,5% in MFM and from +12,5% to −11,7% in FM, the minimum and maximum number of signal CLOCK periods that counters 346, 347 may reckon are 448−(16×2)=416 and 576−(16×2)=544 in MFM, 896−(16×2)=864 and 1144−(16×2)=1112 in FM respectively.

In MFM the actual limit decimal values present on the outputs of counters 346, 347 will be 67 with a speed variation of +12,5 and 195 with a speed variation of −12,5% as such counters overflow 2 times during interval T0 owing to the presetting of value 163.

On the contrary the actual limit decimal value present on the outputs of counters 346, 347 will be 3 with a speed variation of +12,5% and 251 with a speed variation of −11,7% as such counters overflow 4 times during interval T0 owing to the preset of value 163.

In the case of recovery of MFM or FM recorded information, tables I and II respectively supply a correspondence between some of the decimal values indicated by signals $\Delta0 \div \Delta4$ (where $\Delta4$ is the most significant bit), the corresponding decimal values related to the information present on outputs $C0 \div C7$ (where C7 is the most significant bit) of counters 346, 347 and the actual number M of signal CLOCK periods detected within interval T0 by counters 346, 347.

In the fourth column of tables I and II, E indicates (with an approximation of 1/4 of the CLOCK period) the average duration error of an interval expressed in CLOCK periods by bits $\Delta0...\Delta4$ as to a nominal

8

interval having a length of 2000 nsec. in MFM and 4000 nsec in FM. The fifth column of Tables I and II indicates the per cent error speed $\Delta V\%$ wyich is related to each value $(\Delta 0 \div \Delta 4)_D$.

TABLE I

| $(\Delta 0 \div \Delta 4)_D$ | $(C0 \div C7)_D$ | M | E | $\Delta V\%$ |
|---|---|---|---|---|
| $0 \div 7$ | $\leq 63$ | $\leq 412$ | $< -4$ | $> +12{,}5$ |
| 8 | $64 \div 71$ | $413 \div 420$ | $-4$ | $+12{,}5$ |
| 9 | $72 \div 79$ | $421 \div 428$ | $-4{,}5$ | $+10{,}93$ |
| : | : | : | : | : |
| 15 | $120 \div 127$ | $469 \div 476$ | $-0{,}5$ | $+1{,}56$ |
| 16 | $128 \div 135$ | $477 \div 484$ | 0 | 0 |
| : | : | : | : | : |
| 20 | $160 \div 167$ | $509 \div 516$ | $+2$ | $-6{,}25$ |
| 21 | $168 \div 175$ | $517 \div 524$ | $+2{,}5$ | $-7{,}81$ |
| : | : | : | : | : |
| 24 | $192 \div 199$ | $541 \div 548$ | $+4$ | $-12{,}5$ |
| $25 \div 31$ | $\geq 200$ | $\geq 549$ | $> +4$ | $< -12{,}5$ |

TABLE II

| $(\Delta 0 \div \Delta 4)_D$ | $(C0 \div C7)_D$ | M | E | $\Delta V\%$ |
|---|---|---|---|---|
| 0 | $0 \div 7$ | $861 \div 868$ | $-8$ | $+12{,}5$ |
| 1 | $8 \div 15$ | $869 \div 876$ | $-7{,}5$ | $+11{,}7$ |
| 2 | $16 \div 23$ | $877 \div 884$ | $-7$ | $+10{,}93$ |
| : | : | : | : | : |
| 10 | $80 \div 87$ | $941 \div 948$ | $-3$ | $+4{,}68$ |
| : | : | : | : | : |
| 16 | $128 \div 135$ | $989 \div 996$ | 0 | 0 |
| 17 | $136 \div 143$ | $997 \div 1004$ | $+0{,}5$ | $-0{,}78$ |
| : | : | : | : | : |
| 25 | $200 \div 207$ | $1061 \div 1068$ | $+4{,}5$ | $-7{,}03$ |
| : | : | : | : | : |
| 30 | $240 \div 247$ | $1101 \div 1108$ | $+7$ | $-10{,}93$ |
| 31 | $248 \div 255$ | $1109 \div 1116$ | $+7{,}5$ | $-11{,}7$ |

As already indicated, Figure 6 shows in timing diagram some signals mentioned in Figures 3, 4, 5 description.

Further, in Figure 6 signals CARRY 22, CARRY 342 are indicative of the signals present on output CARRY of counters 22, 342 respectively, while $(OUT\ 22)_D$ and $(OUT\ 342)_D$ are indicative of the decimal value

**EP 0 141 028 B1**

related to the count of counter 22 of Figure 3 and counter 342 of Figure 5 respectively, at each CLOCK signal period.

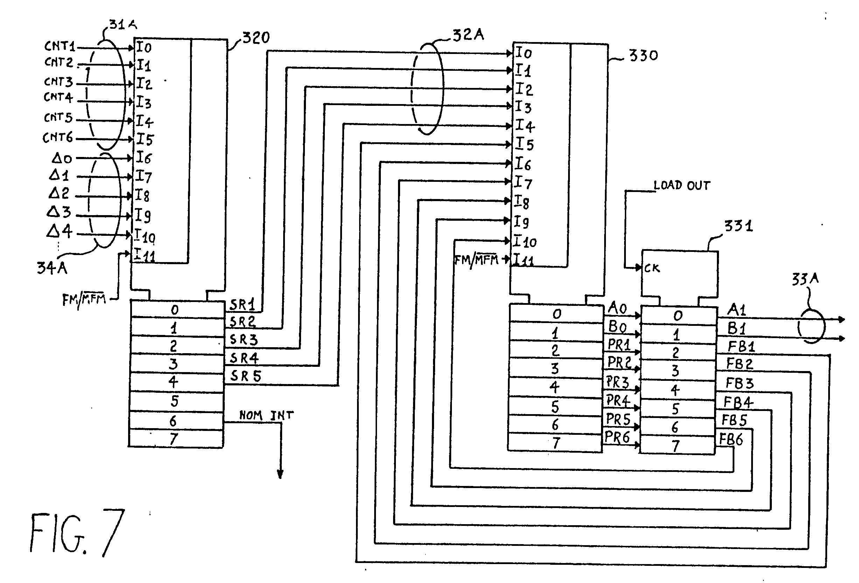

Figure 7 shows in detail compensation units 32 and 33 of Figure 2.

Compensation unit 32 consists of a programmable read only memory 320 having a 4K byte capacity, while compensation unit 33 consists of programmable read only memory 330 having a 4K byte capacity and of a 8 bit latching register 331.

Memory 320 receives signals CNT1÷CNT6 on its least significant address inputs I0÷I5 through channel 31A, and signals $\Delta0÷\Delta4$ on its most significant address inputs I6÷I10, through channel 34A. Memory 320 receives, on its most significant address input I11, a signal FM/$\overline{MFM}$ at logical level 1(0) in the case of information recorded in FM ($\overline{MFM}$) recovery.

Both in FM and in MFM each possible pair of codes CNT1÷CNT6 and $\Delta0÷\Delta4$, indicative of a measured interval duration (CNT1÷CNT6) and of a current speed error previously detected and still in force ($\Delta0÷\Delta4$), addresses a memory location wherein a 5 bit binary code is stored which is indicative of the measured interval duration (CNT1÷CNT6) corrected according to the current speed error.

Such code is available at output SR1÷SR5 of memory 320.

In each memory location a bit is further recorded indicating whether code CNT1÷CNT6 stands for an interval duration which differs from the nominal interval duration of 2 μsec in FM or of 4 μsec in MFM by a value not higher than a certain per cent value ($\pm12,5$ in MFM and $-11,7\%÷+12,5\%$ in FM).

Such bit is available at a further output of memory 320 which supplies signal NOM INT to speed error detecting unit 34.

For each measured interval (CNT1÷CNT6), memory 320 is steadily adressed with the rising edge of signal STOP and for the whole time such signal remains at logical level 1.

Signal LOAD OUT, which sets/resets flip-flop 340 according to the logical level of NOM INT, is generated with a delay of 1000 nsec as to the rising edge of STOP.

Therefore any kind of programmable memory, even slow, provided it has an address selection and reading out time lower than 1000 nsec could be used as memory 320 to assure the stable generation of signal NOM INT before signal LOAD OUT.

Practically, as some of memory 320 outputs address in cascade memory 330, whose read out data are strobed by signal LOAD OUT, the sum of the read out and address selection times of both the memories must be lower than 100 nsec.

Each of the possible 32 codes present at outputs SR1÷SR5 is preferably indicative of interval durations corrected as to speed error and variable from 2000 nsec to 3937,5 nsec by increments of 62,5 nsec. In fact the peak shift phenomenon, lacking speed errors, causes an interval duration increase as to a corresponding nominal intervals of 2μsec and a reduction of the intervals as to a corresponding nominal intervals of 4 μsec.

The so defined value range is therefore adequate.

Memory 320 programmation is obvious. Each possible code CNT1÷CNT6 is indicative of a measured interval duration.

Such duration must be percentually reduced or increased according to the speed per cent error indicated by code $\Delta0÷\Delta4$.

The corrected duration is indicated by its representative code and recorded into the memory location addressed by the correspondent codes CNT1÷CNT6 and $\Delta0÷\Delta4$ and by bit FM/$\overline{MFM}$.

Referring again to Figure 7, outputs SR1÷SR5 of memory 320 are connected, through channel 32A to address input I0÷I4 of memory 330 and supplies them, each time, with a code indicative of the actual duration (corrected as to speed) of the measured interval; such code is indicated by $DE_N$ and marked with order number N.

Memory 330 further receives signal FM/$\overline{MFM}$ on its most significant input I11.

The recovery that memory 330 has to perform is the reckoning of the nominal duration to be associated to code $DE_N$ bearing in mind that the duration indicated by $DE_N$ is affected by the peak shift phenomenon. Memory 330 also receives, on its input I5,...I10, some signal which will be considered later on.

When memory 330 is addressed by code $DE_N$ (and by the other information), it generates, on outputs A0, B0, a binary code $DN_N$ indicative of the nominal duration to be associated to the actual duration signified by code $DE_N$.

If MFM if A0, B0=01, 10, 00 a nominal duration of 2 μsec, 3 μsec, 4 μsec respectively is associated to the interval.

In FM, on the contrary, if A0, B0=11, 01 a nominal duration of 2 μsec 4 μsec respectively is associated to the interval.

In case of MFM recorded information recovery (FM/$\overline{MFM}$=0) the information present on outputs PR1÷PR6 of memory 330 is indicative of the actual duration (corrected as to speed) of interval N, in coded form, as well as of the nominal duration associated to it and of the nominal previous duration of the interval (N−1).

All these pieces of information are expressed by a one 6 bit code which is able to represent all the reasonably possible combinations of them.

In fact only a certain field of possible actual duration corresponds to a nominal duration of interval N.

However, for description clearness sake is better to consider such pieces of information as distinct and respectively indicated by $DE_N$ (actual duration of interval N), $DN_N$ (nominal duration of interval N) and $DN_{N-1}$ (nominal duration of interval $N-1$).

In case of FM recorded information recovery ($FM/\overline{MFM}=1$) the information present on outputs $PR1\div PR6$ of memory 330 may be not significant.

Output A0, B0 $PR1\div PR6$ of memory 330 are connected to corresponding inputs of register 331, which latches and makes the information present at its inputs available on its outputs with the rising edge of signal LOAD OUT.

Outputs A1, A2 of register 331 (corresponding to outputs A0, B0 of memory 330) are connected to unit 40 of Figure 2 through channel 33A while outputs $FB1\div FB6$ (corresponding to outputs $PR1\div PR6$ of memory 330) are connected to the address inputs $I6\div I10$ of the same unit 40. The compensation operation of unit 33 is therefore the following. At an indefinite instant preceding signal LOAD OUT memory 330 receives in input information $DE_N$ as well as information $DE_{N-1}$, $DN_{N-1}$, $DN_{N-2}$ (in case of MFM) or a non significant information (in case of FM) in feedback from register 331 outputs.

Besides code $DN_{N-1}$ will be present at outputs A1, B1 of register 331. The so-addressed memory 330 generates in output the following set of information:

on outputs A0, B0: code $DN_N$

on outputs $PR1\div PR6$: $DE_N$, $DN_N$, $DN_{N-1}$ (in case of MFM), non significant information (in case of FM)

These pieces of information are loaded into register 331 at the rising edge of LOAD OUT.

The nominal duration $DN_N$ of interval N is therefore available and it is used by unit 40 for generating timing window signal RD CLK and for re-generating the reading pulse RD DATA.

Further, the several pieces of information present on outputs $FB1\div FB6$ of register 331 are used for readdressing memory 330 and establishing the nominal duration $DN_{N+1}$ of the subsequent interval $N+1$.

At the beginning since there are not previously recorded data, memory 330 can associate to a code $DE_N$ (with N=1, 2, 3, etc.) a wrong code of nominal duration $DN_N$.

Such code, processed by unit 40, can cause a wrong generation of signals RD DATA and RD CLOCK (window).

This does not cause any problem as controller 3 (Figure 1) ignores these signals until it detects a suitable number of synchronization field bytes (that is 2 bytes of 0 in FM or 4 bytes of 1 or 0 in MFM) and then, a preestablished code named "Address Mark" within a preestablished number of bytes.

The actual length DE of an activation field interval, corrected as to possible speed error, coincides (possibly apart from the first and the last interval) with the nominal duration DN.

Thus, when a synchronization field is read out, memory 330 generates at outputs $PR1\div PR6$, one of the allowable codes corresponding to the measured interval DE equal to the nominal interval DN and, during the reading out of two subsequent intervals, the code generated at outputs $PR1\div PR6$ is univocally established.

So, the acknowledgement of a first part of the synchronization field allows to preset the speed correction unit 32 and the immediately subsequent acknowledgement of other two synchronization field intervals enables compensation unit 33 to lock to effective data stream.

It will be now explained how, in the case of MFM recorded information, the knowing of $DN_{N-2}$, $DN_{N-1}$, $DE_{N-1}$, allows to univocally associate to an actual length $DE_N$ its nominal duration $DN_N$.

Considering an interval N between pulses $n-1$ and n, the difference $E_N$ between actual length and nominal length of such interval is given by

$$E_N = DE_N - DN_N = PS_{n-1} + PS_n$$

where $PS_{n-1}$, $PS_n$ is the peak shift of pulse $n-1$, n respectively.

$E_N$ has a maximum absolute value when both intervals $N-1$, $N+1$ have a nominal length of 2 μsec while interval N has a nominal length of 4 μsec, or when intervals $N+1$, $N-1$ have a nominal length of 4 μsec, while interval N has a nominal length of 2 μsec.

Anyway, considering that a magnetical support is a passive element, the effect cannot exceed the case, that is $E_N$ must not be such as to generate an interval N of actual duration longer (if $DN_N=2$ μsec) or shorter (if $DN_N=4$ μsec) than the consequent actual length of $DN_{N-1}$, $DN_{N+1}$.

This means that each pulse peak shift cannot be longer than 500 nsec, as absolute value.

According to the above considerations it is easy to conclude that:

| | | | |
|---|---|---|---|
| $2000 \leq DE_N \leq 3000$ | if | $DN_N=2$ μsec. |
| $2333 < DE_N < 3666$ | if | $DN_N=3$ μsec. |
| $3000 < DE_N \leq 4000$ | if | $DN_N=4$ μsec. |

In FM it is easy to discriminate among the intervals having nominal duration 2 μsec and 4 μsec according to the actual duration only. On the contrary, in MFM, a substantial indetermination exists among the intervals of nominal duration 2, 3 μsec and 3, 4 μsec. Such indetermination can be overcome if $PS_{n-1}$ is known, that is pulse $n-1$ peak shift defining the end of interval $N-1$ and the beginning of interval N.

In fact, if $PS_{n-1}$ is known, $DN_N=(DE_N-PS_{n-1})-PS_n$ is known apart from a variable factor $PS_n$ shorter (in absolute value) than 500 nsec., and the association to $DN_N$ of a nominal length of 2, 3, 4 μsec is unmistakable.

It is further known that the pulse peak shift varies according to the interval nominal duration which preceed or follow it, so that:

$$PS_{n-1}=F(DN_N, DN_{N-1})$$

The function F, though difficult to be analytically expressed, can be experimentally defined.

In the case of $PS_{n-1}$ such relation cannot be used because $DN_N$ is not known.

But it can be used to define $PS_{n-2}=F(DN_{N-1}, DN_{N-2})$ and as

$$DN_{N-1}=DE_{N-1}-(PS_{n-2}+PS_{n-1})$$

it results that

$$PS_{n-1}=DE_{N-1}-DN_{N-1}-F(DN_{N-1}, DN_{N-2}).$$

In other words $PS_{n-1}=F_1(DE_{N-1}, DN_{N-1}, DN_{N-2})$ where $F_1$ is a functional relation which can be defined experimentally even if not easy to be analytically expressed.

Therefore $DN_N=DE_N-F_1(DE_{N-1}, DN_{N-1}, DN_{N-2})-PS_n$ is obtained, that is

$$DN_N=F_2(DE_N, DE_{N-1}, DN_{N-1}, DN_{N-2})-PS_n.$$

The functional relation $F_2$ is processed by memory 330.

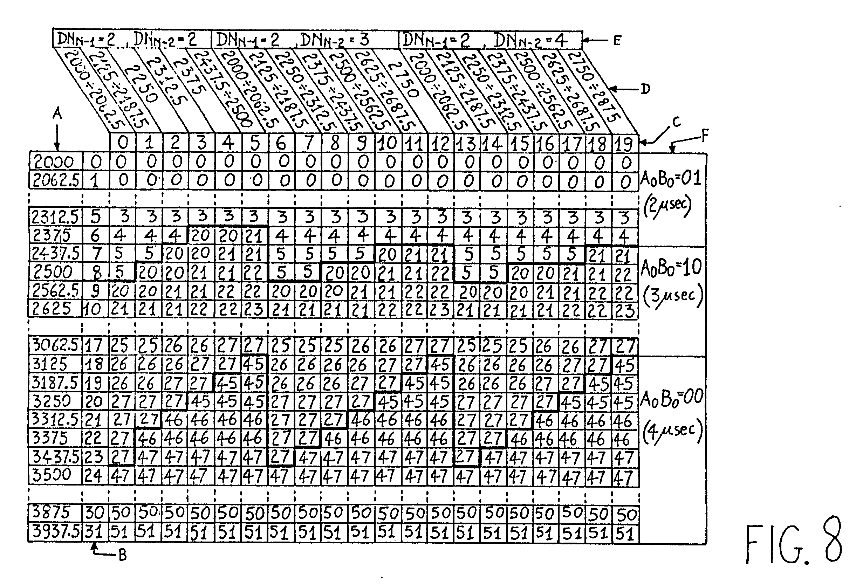

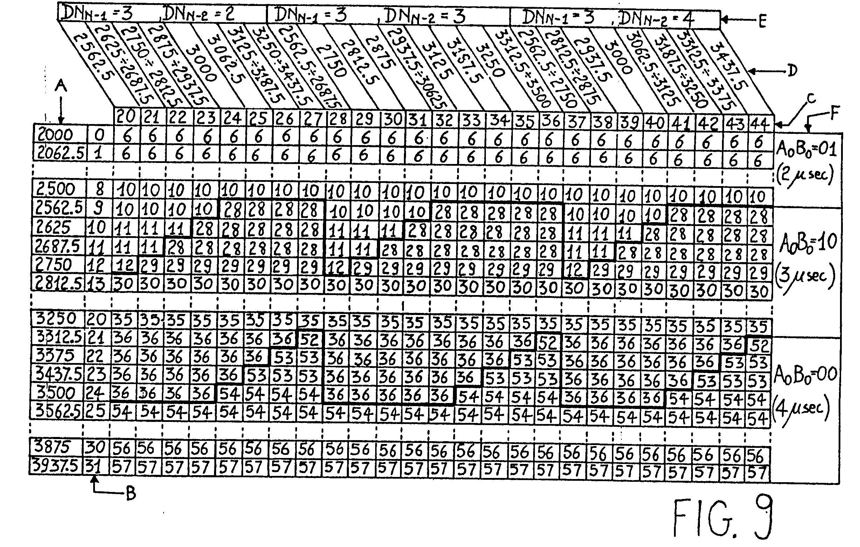

According to the above considerations and to experimental verifications, within each location of memory 330 zone used in MFM, a code A0, B0 is stored which defines the nominal duration to be associated to actual duration code (SR1−SR5) depending on code (FB1÷FB6) and an additional code which substantially gives a measurement indicative of the peak shift to be recovered on the subsequent actual duration measurement. Figure 8, 9, 10 show in a partial but meaningful way a memory 330 zone mapping used in the case of MFM recording.

A description of memory 330 zone mapping, used in the case of FM recording is omitted as obvious.

In Figure 8, 9, 10 the content of memory 330 is shown in a 32 row and 64 column matrix which identify 2048 memory locations.

Conceptually each location is identified by a row address and a column address.

The row address, shown as column B decimal, is indicative of the druation $DE_N$ of an interval, in coded form.

The interval duration $DE_N$ is quoted in column A.

The column address, shown in decimal form in row C, is indicative (in coded form) of the set of information given by the actual duration $DE_{N-1}$ and by the nominal durations $DN_{N-1}$, $DN_{N-2}$.

The actual duration of each interval N−1, associated to each one of the column code, is quoted in row D.

The different combination of durations $DN_{N-1}$, $DN_{N-2}$ associated to each set of column codes is quoted in row E.

In each location, a code indicative of $DE_N$, $DN_N$, $DN_{N-1}$ is quoted in decimal form.

The actual value of eac one of such pieces of information is the same associated to the column codes, except that the intervals to which such information refers are those of order N and N−1 instead of N−1 and N−2.

Two scored lines cut the memory matrix into 3 fields, each one containing all the memory location which includes, besides the already mentioned codes, a code of nominal duration $DN_N=2$ μsec, 3 μsec, 4 μsec respectively.

Such code is available at outputs A0, B0 of memory 330 and is quoted in column F.

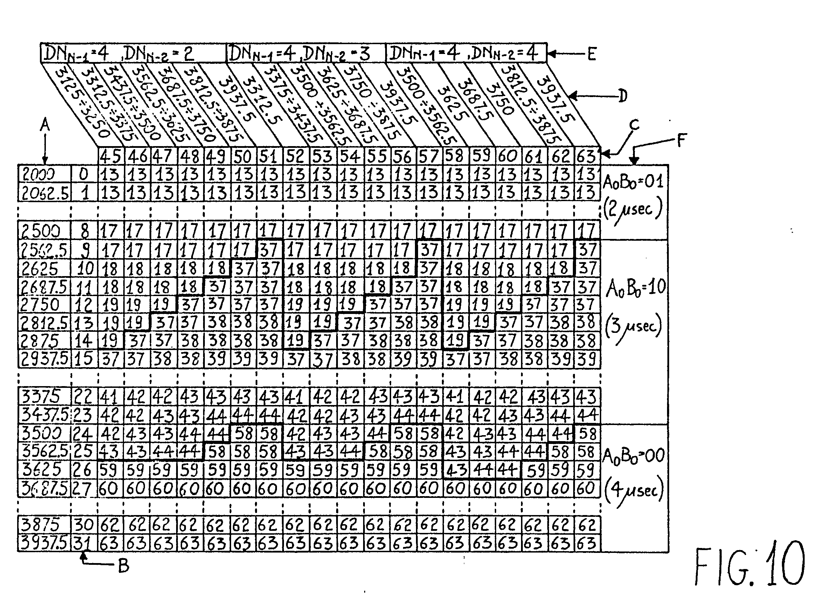

In Figure 8 and 10 is to be noted that, in the case the measured duration $DE_N$ (column A) is to be associated to $DN_N=3$ μsec and such interval N is preceded by an interval N−1 with $DN_{N-1}=2$ or 4 μsec tysre is no correspondence between the measured $DE_N$ and the $DE_N$ indicated by the code used to define $DN_{N+1}$ but such code is indicative of a $DE_N$ longer, equal or shorter than the actual one, experimentally rectified for considering two factors.

1) Take account of the intrinsic indetermination error in the discrete measurement of $DE_N$, in the suitable correcting direction and in the case with higher marginal risk.

2) Take account of the second order influence that pulse n−2 exercises on $PS_n$ and which is not considered by relation $PS_n=F(DN_{N+1}, DN_N)$.

The farther pulse n−2 is from pulse n, the less is such influence. In other words value $PS_n$, reckoned as difference between $(DE_N-PS_{n-1})$ and $DN_N$, is affected by a certain round of error as to the real value, and the longer duration $DE_{N-1}$ is relative to $DN_{N-1}$, the higher is such error.

The real value is implicitily applied to $PS_n$ by an increase correction of $DE_N$, and the longer the length $DE_N$ is, the higher is the correction applied.

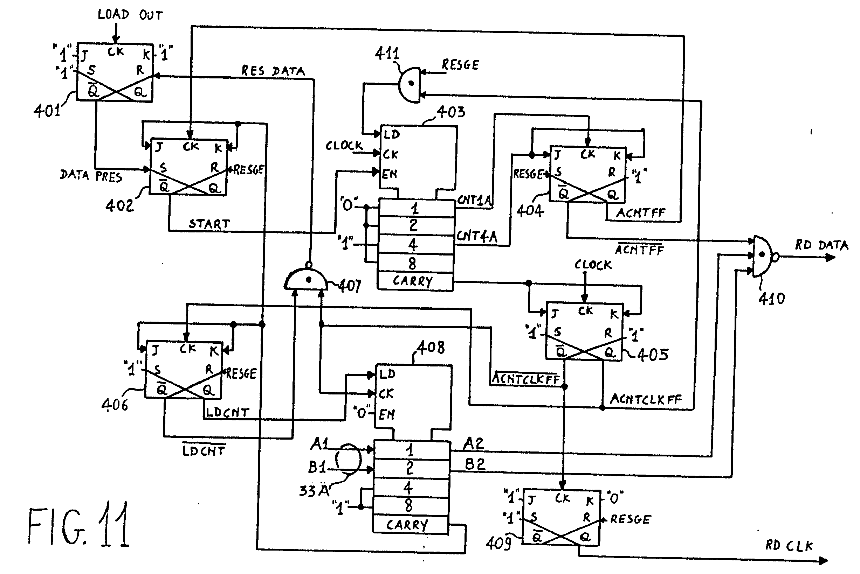

Figure 11 shows in detail regeneration logical unit 40.

Such unit generates the square wave window signal RD CLK and the read out data or timing pulse RD DATA according to signals A1, B1 which defines the nominal duration of the measured interval and of signal LOAD OUT (such signal being generated by timing unit 20 on reception of each pulse RAW DATA with a delay of 1250 nsec rounded down to less than 62,5 nsec).

12

# EP 0 141 028 B1

In FM RD CLK signal must be respectively constituted by one, two half waves or phases for each interval of nominal duration 2, 4 µsec.

Further, in FM, if the interval nominal duration is of 2, 4 µsec the pulse RD DATA must be completely included within the first (and sole) or second phase of the window signal respectively.

On the contrary, in MFM, the window signal RD CLK must be constituted for each interval of nominal length 2, 3, 4 µsec by two, three, four half waves or phases respectively and the pulse RD DATA must be completely included within the last phase of the window signal corresponding to the interval.

Unit 40 consists of six J, K flip-flops 401, 402, 404, 405, 406, 409, 2 4 bit counters 403, 408, a two input AND gatge 411, a two input NAND gate 407 and a three input NAND gate 410.

Flip-flop 401 receives on its timing input the signal LOAD OUT and on its reset input R a signal RES DATA.

A signal permanently at logical level 1 is received by flip-flop 401 on the remaining inputs.

Signal DATA PRES is present on the inverted output $\overline{Q}$ of flip-flop 401.

Signal DATA PRES drops to logical level 0 with the rising edge of signal LOAD OUT.

Signal DATA PRES rises to logical level 1 when signal RES DATA falls to logical level 0.

Signal DATA PRES is applied to the set input of flip-flop 402 which receives on its timing input a signal ACNTFF and on its reset input an initializing reset signal RESGE which is at logical level 0 only during the initializing phase.

The J, K inputs of flip-flop 402 are connected to the CARRY output of counter 408.

On the inverted output $\overline{Q}$ of flip-flop 402 a signal START is present which falls to logical level 0 when signal DATA PRES falls to logical level 0 and rises again to logical level 1 with the rising edge of signal ACNTFF if CARRY output of counter 408 is at logical level 0 and if meanwhile signal DATA PRES has risen again to logical level 1. Signal START is applied to the enabling input of counter 403 which receives on its clock input signal CLOCK.

The loading input LD of counter 403 is connected to the output of AND gate 411. Such gate receives at its two inputs signal RESGE and a signal ACNTCLKFF respectively.

Each of counter 403 data inputs receives a suitable level in order that, with the rising edge of signal CLOCK and with input LD at logical level 0, counter 403 is preset at decimal count value 4.

When START falls to logical level 0, counter 403 increments the information present on its outputs by one unit at each rising edge of signal CLOCK.

Outputs CNT1A, CNT4A of counter 403 are connected to the clock input and to the J, K inputs respectively of flip-flop 404.

Such flip-flop further receives signal RESGE and a signal permanently at logical level 1 on its set and reset inputs respectively.

Signal ACNTFF, $\overline{ACNTFF}$ are present on outputs Q, $\overline{Q}$ respective of flip-flop 404.

As already mentioned, signal ACNTFF is applied to the timing input of flip-flop 402.

The CARRY output of counter 403 is connected to inputs J, K of flip-flop 405 which further receives signal CLOCK on its clock input and a signal permanently at logical level 1 on its set S and reset R inputs. Signals ACNTCLKFF, $\overline{ACNTCLKFF}$ are present on outputs Q and $\overline{Q}$ respectively of flip-flop 405.

Signal ACNTCLKFF besides being provided to an input of AND gate 411 is applied to the clock input of flip-flop 406 whose J, K inputs are connected to the CARRY output of counter 408.

Set and reset inputs of flip-flop 406 receive signal RESGE and a signal permanently at logical level 1 respectively.

Signal LDCNT and $\overline{LDCNT}$ are present on outputs Q, $\overline{Q}$ respectively of flip-flop 406.

Signal $\overline{LDCNT}$ is applied to an input of NAND gate 407 which receives signal $\overline{ACNTCLKFF}$ on its second input.

Signal RES DATA is present on the output of NAND gate 407.

As already mentioned such signal is applied to the reset input of flip-flop 401.

Signal $\overline{ACNTCLKFF}$ besides being provided to the input of NAND gate 407, is applied to the timing inputs of counter 408 and of flip-flop 409.

Flip-flop 409 receives on its J, K inputs a signul at logical level 1, 0 respectively.

Further, flip-flop 409 receives on its set and reset inputs a signal at logical level 1, 0 respectively.

On the direct output Q of flip flop 409 a signal RD CLK is present which commutates at each rising edge of signal $\overline{ACNTCLKFF}$.

Counter 408 receives signal LDCNT on its load input and a signal at logical level 0 on its enabling input.

The two least significant data inputs of counter 408 are connected to outputs A1, B1 of register 331 of unit 33 of Figure 7.

On the contrary the two most significant data inputs of counter 408 receive a signal permanently at logical level 1.

Counter 408 transfers on its outputs the information present on its data inputs in correspondence of the rising edge of signal $\overline{ACNTCLKFF}$ when signal LDCNT is at logical level 0.

Then, counter 408 increments the information present on its outputs by one unit in correspondence of a rising edge of signal $\overline{ACNTCLKFF}$ when LDCNT is at logical level 1.

Outputs A2, B2 of counter 408 are connected to two inputs of NAND gate 410 which receives signal ACNTFF on its third input.

13

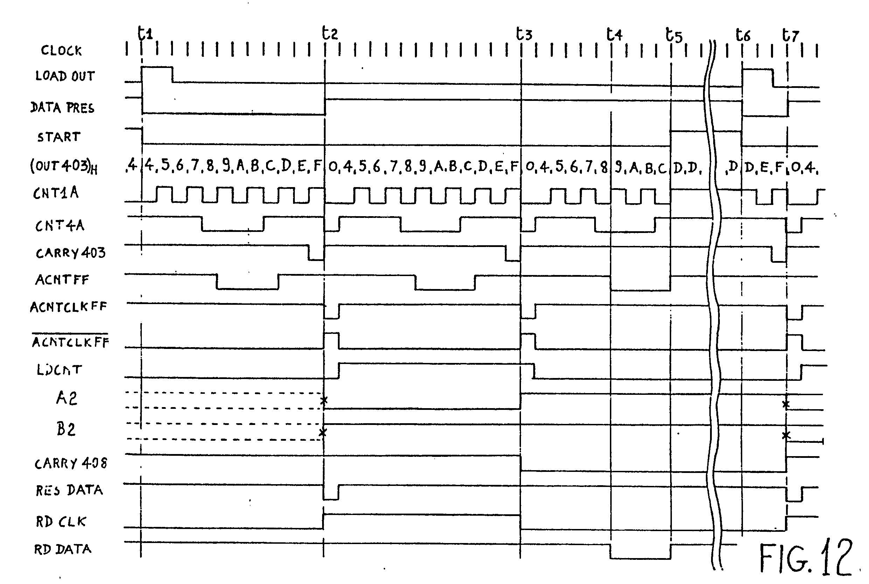

Unit 40 operation can be easily understood by examining the timing diagram of Figure 12 which shows some of the signals of Figure 11, starting from an initial reset status. The sequence (OUT 403)$_H$ is indicative of counter 403 status in hexadecimal code. Flip-flop 401 is set at the reception of the first pulse LOAD OUT (instant t1) therefore DATA PRES falls to 0 and sets flip-flop 402. START falls to 0 and enables counter 403 to count. When counter 403 reaches the count status 8 the output CNT4A falls to 0 and flip-flop 404 is reset (ACNTFF=0) by the immediately subsequent CLOCK.

When counter 403 reaches the count status C, the output CNT4A rises again to 1 and flip-flop 404 is set (ACNTFF=1) by the immediately subsequent CLOCK.

The rising edge of ACNTFF does not modify flip-flop 402 status because signal CARRY 408 in output from counter 408 is at logical level 1.

When counter 403 reaches the count status F, its output CARRY falls to 0 (CARRY 403=0).

Flip-flop 405 is therefore reset (ACNTCLKFF=0 and $\overline{\text{ACNTCLKFF}}$=1) by the immediately subsequent CLOCK (instant t2).

Counter 408 is enabled to load (LDCNT=0) by the rising edge of signal $\overline{\text{ACNTCLKFF}}$.

The binary information which defines the nominal duration of the measured interval preceding the pulse RAW DATA (which generated pulse LOAD OUT) is available at outputs A2, B2.

Precisely: in MFM

A2=0 and B2=1 if th enominal length is 2 μsec.

A2=1 and B2=0 if th enominal length is 3 μsec.

A2=0 and B2=0 if the nominal length is 4 μsec.

The case where A2=0 and B2=1 is shown by diagram of Figure 12. Further, with the rising edge of $\overline{\text{ACNTCLKFF}}$ flip-flop 409 commutates and signal RDCLK rises to 1 defining the beginning of the first phase of the interval associated to pulse LOAD OUT.

At the same time signal RES DATA falls to 0 ($\overline{\text{ACNTCLKFF}}$=1 and $\overline{\text{LD CNT}}$=1), flip-flop 401 is reset, DATA PRES rises to 1, counter 403 reaches the count status 0 and CARRY 403 rises to 1 while CNT4A falls to 0.

Though, with the immediately subsequent CLOCK, counter 403 is arranged at the count value 4 (because ACNTCLKFF=0), flip-flop 404 stays in set, flip-flop 405 is set as well as flip-flop 406.

Though RES DATA rises again to 1.

Then, when counter 403 reaches the count status 8 CNT4A falls to 0 and flip-flop 404 is reset by the subsequent rising edge of CLOCK. When counter 403 reaches the count status C, CNT4A rises again to 1. Flip-flop 404 is set again by the subsequent CLOCK.

The rising edge of ACNTFF does not modify the set status of flip-flop 402 because CARRY 408=1.

When couner 403 reaches the count status F, CARRY 403 falls to 0.

With the immediately subsequent CLOCK, that is at instant t3 the following events occur:

flip-flop 405 is reset (ACNTCLKFF=0 and ACNTCLKFF=1).

flip-flop 409 toggles and RD CLK falls to 0.

counter 408 increments by one unit and if it was A2=0, B2=1, the count status F is reached and CARRY 408 falls to 0.

counter 403 is set in the count status 0 and CARRY 403 rises to 1.

At instant t3, with the subsequent CLOCK, counter 403 is set in the count status 4 and flip-flop 405 is set. The rising edge of ACNTCLKFF causes the reset of flip-flop 406 and LD CNT falls to 0.

When counter 403 reaches the count status 8 flip-flop 404 is reset and $\overline{\text{ACNTFF}}$ rises to 1 (instant t4).

At this point, as A2=1 and B2=1, signal RD DATA falls to 0 and it stays at 0 until flip-flop 404 is set again (instant t5).

At this instant flip-flop 402 too is reset because CARRY 408=0.

START signal is at 1 and counter 403 is therefore stopped at status D.

Correspondingly unit 40 is kept in the so defined status until a new pulse LOAD OUT is received.

Diagram in Figure 12 shows that such pulse is received at instant t6. Flip-flop 401 is set at the reception of signal LOAD OUT and DATA PRES falls to 0.

Flip-flop 402 is set and START falls to 0.

Counter 403 starts to increment, this time starting from status D.

When it reaches the status F, (instant t7) flip-flop 405 is reset and $\overline{\text{ACNTCLKFF}}$ falls to 0 while ACNTCLKFF rises to 1.

Thus at instant t7 signal RD CLK commutates and RES DATA falls to 0.

Besides counter 408 loads a new information with an ominal duration relative to the new received pulse LOAD OUT and CARRY 408 rises again to 1.

With the subsequent CLOCK flip-flop 406 is set and all the already described events subsequent to instant t2 occur in sequence.

Diagram of Figure 12 shows the case of an information A1=0 and B1=0 received from register 408, that is of a nominal interval duration of 2 μsec.

In the case where A1=1 and B1=0, that is for a nominal interval of 3 μsec., it is easy to verify that at instant t3, signal CARRY 408 stays at 1 and, with the subsequent CLOCK, flip-flop 406 is kept in set and LD CNT remains at 1.

14

Therefore a sequence of events follows instant t3 equal to the one described for time interval t2, t3 except that signal RES DATA does not change.

Such sequence is then followed by the sequence of events mentioned with reference to interval t3, t4 and so on.

Also in the case where A1=0 and B1=0, that is for a nominal interval of 4 µsec, at instant t3 signal CARRY 408 remains at 1 and t3 is followed by two identical sequences of events as the ones described for time t2, t3, except that signal RES DATA does not change.

Anyway at the end of each sequence a toggling of signal RD CLK occurs.

In conclusion, bearing in mind that the CLOCK period is of 62,5 nsec, unit 40 operation is the following.

Unit 40 is enabled by a pulse LOAD OUT.

After $3 \times 62,5 = 187,5$ nsec from pulse LOAD OUT reception (unless LOAD OUT is the first received signal) unit 40 toggles the phase signal RD CLK, loads counter 408 and activates a first sequence having a length of $13 \times 62,5$ nsec.

This first sequence is performed 1, 2, 3 times depending on the nominal duration loaded in counter 408 which may be 2, 3, 4 µsec respectively.

In any case signal RD CLK toggles at the beginning of the sequence. In other words 1, 2, 3 window signal phases are generated.

Once the preestablished number of first sequences is performed a second sequence is activated of a length variable according to the reception of a new pulse LOAD OUT and however not shorter than $13 \times 62,5 = 812,5$ nsec.

At the beginning of this second sequence signal RD CLK toggles and a new window signal phase is generated.

Further, during such phase, a signal RD DATA=0 is generated which starts with a delay of $6 \times 62,5 = 374,5$ nsec as to the beginning of the phase and that ends with a delay of $10 \times 62,5 = 625$ nsec as to the beginning of the phase.

Such signal RD DATA is always within the corresponding phase.

The diagram of Figure 12 shows the case of pulses LOAD OUT received when unit 40 is not active.

Actually, pulse LOAD OUT may be received when the unit is still active. For instance, this may occur when, in MFM, a nominal interval of 4 or 3 µsec is followed by a nominal interval of 2 µsec.

Unit 40 correctly operates also in this case, without information loss, if the speed error is within the range of $\pm 12,5\%$.

For instance, let us suppose that a nominal interval of 4 µsec followed by two nominal intervals of 2 µsec each are detected in sequence.

Pulse LOAD OUT, corresponding to the nominal interval of 4 µsec, is therefore followed by a second pulse LOAD OUT, corresponding to the nominal interval of 2 µsec after a time interval greater than $2000 - 12,5\% = 1750$ nsec, and by a third pulse LOAD OUT after a time interval longer than 3500 nsec.

The second pulse is therefore received when repetition of the first sequence is still running and flip-flop 401 is already reset.

At the reception of the second pulse LOAD OUT flip-flop 401 is set again so, at instant t5 of the second sequence (Figure 12), unit 40, instead of stopping, goes on completing the second sequence.

Flip-flop 401 is reset again once $4 \times 812,5 + 3 \times 62,5 = 3500$ nsec elapsed, that is before the third pulse LOAD OUT is received.

Therefore the first LOAD OUT pulse can be detected.

In order to increase unit 40 operation range the phase length can be obviously reduced or flip-flop 401 substituted by a FIFO memory (First In, First Out) with a logical network for reading out the information stored therein.

It is clear that several other modifications can be brought to digital phase lock apparatus without departing from the scope of the present invention.

Particularly in case of FM recording too, some codes can be recorded in memory 330 which are read out by outputs PR1÷PR6 and which express in coded form the actual $DE_{N-1}$ and nominal $DN_{N-1}$ duration of interval N−1.

This enable to increase the discrimination margin in determination of the nominal duration $DN_N$ of interval N as a function of the previous interval duration.

A list of the circuits used for the preferred embodiment of the present invention is now supplied:

flip-flop 21, 23, 340, 341, 401, 402, 404, 405, 406, 409: circuit marketed by US firm TEXAS with code 74LS109A;

counters 22, 310, 311, 342, 346, 347, 403, 408: circuit marketed by US firm TEXAS with code 74LS169A

shifting register 25: circuit marketed by US firm TEXAS with code 74LS195A

latching registers 349, 331: circuit marketed by US firm TEXAS with code 74LS374

memory 320: circuit marketed by US firm FAIRCHILD with code 2732

memory 330: circuit marketed by US firm FAIRCHILD with code 2732

**Claims**

1. Digital apparatus for recovery of data, the data being recorded in FM or MFM on a magnetic media

15

EP 0 141 028 B1

moving at a speed about a nominal one, the result of reading of the magnetic media being provided in input to said apparatus as a sequence of timing/data pulses, each two subsequent timing data pulses identifying a variable time interval, said apparatus·being clocked by clock pulses received from a clock pulse generation; comprising:

timing and measurement means (20, 31) responsive to said clock pulses and to said timing/data pulses, providing in output, after reception of each $n^{th}$ one of said timing/data pulses a first code (CNT1—6; 31A) indicative of the actual duration of the time interval N between said timing/data pulse n and the immediately preceeding one n−1 of said timing/data pulses as well as an activation pulse (LOAD OUT) suitably delayed as to said received $n^{th}$ timing/data pulse,

logical means (32) receiving in input said first code and supplying in output a first control signal (NOM INT) at a first level if the actual duration of said interval N differs from a preestablished nominal duration for no more than a preestablished amount,

speed error detection and storage means (34) receiving in input said first control signal (NOM INT) and said activation pulses (LOAD OUT), said speed error detection and storage means (34) supplying in output a second code ($\Delta 0-\Delta 4$; 34A) indicative of the speed error of said magnetic media as to a nominal speed, said second code ($\Delta 0-\Delta 4$; 34A) being updated when said first control signal (NOM INT) has been at the first level for a preestablished number of subsequent periods between activation pulses (LOAD OUT),

speed error correction means (32) receiving in input said first (CNT1—6; 31A) and second code ($\Delta 0-\Delta 4$; 34A) and supplying in output a third code (SR1—5; 32A) indicative of the duration of said interval N corrected as to the speed error of said media as indicated by the second code,

peak shift correction means (33) a transcoding memory (330) and receiving on a first set of inputs (I0—I4) said third code (SR1—SR5; 32A) related to said N interval and in case of MFM data recording, also receiving on a second set of inputs (I5—I10) a fourth code (FB1—6) indicative of the nominal duration of a plurality of intervals immediately preceding said interval N, as well as of the duration corrected as to speed of at least the interval N-1 immediately preceding, hence of the peak shift of the n-1th of said pulses said peak shift correction means (330) supplying on a first output set, a fifth code (A0, B0) indicative of a nominal duration which must be associated to said N interval and on a second output set, at least in case of MFM data recording, a sixth code (PR1—6) indicative of the nominal duration associated to said N interval and to at least the preceding interval N-1, as well as the duration corrected as to speed of said N interval, hence of the peck shift of the $n^{th}$ of said pulses,

latching means (331) clocked by said activation pulses (LOAD OUT) receiving in input said sixth code (PR1—6) before one said activation pulses and providing in output said sixth code as said fourth code (FB1—6) to said second set of inputs (I5—I10) after clocking by said one of activation pulses (LOAD OUT),

window and signal generating means (40), receiving in input said fifth code (A0, B0; 33A) and triggered by said activation pulses, supply in output a window signal (RD CLK) having a number of alternances indicative of the nominal duration of the interval related to said fifth code (A0, B0), and a timing/data generated pulse (RD DATA) having a suitable pulse relation with the last alternance of said window signal.

2. Digital apparatus as claimed in Claim 1 wherein said logical means and said speed error correction means (32) comprise a second transcoding memory (370) addressed by said first and said second code ($\Delta 0-\Delta 4$; 34A) and delivering in output said first control signal (NOM INT) and said third code (SR1—5; 32A).

3. Digital apparatus as claimed in Claim 1 wherein said speed error detection and storage means (34) comprise:

period counting means (340, 342) responsive to said activation pluses and to said first control signal, providing in output a second control signal at a first level, indicating either that said first control signal has raised to said first level or that said first control signal has remained as said first level for a preestablished number of subsequent periods between activation pulses,

a period duration counter (346, 347) set in a preestablished status by said second control signal at a first level, and incrementing on reception of clock pulses and

a register (349) having inputs connected to outputs of said period duration counter and enabled by said second control signal at a first level indicating that said first control signal has remained at said first level for said preestablished number of subsequent periods, to latch at least the most significant portion of the status count reached by said period duration counter, said most significant portion being provided in output of said register as said second code.

4. Digital apparatus as claimed in Claim 3 wherein said preestablished number of subsequent periods is $2^P$ with P integer.


**Patentansprüche**

1. Digital Anordnung für ein Daten-Lesesystem für auf einem ungefähr mit Nenngeschwindigkeit bewegten magnetischen Träger in FM- oder modifizierter FM-Technik (MFM) gespeicherte Daten, wobei das Leseergebnis vom magnetischen Träger der Anordnung als Eingangssignal in Form einer Folge von Zeitgabe/Datenimpulsen zugeführt wird und je zwei aufeinanderfolgende Datenimpulse ein veränderbares Zeitintervall bestimmen und wobei die Anordnung durch von einem Taktimpulsgenerator gelieferte Taktimpulse forgeschaltet wird und folgende Baugruppen enthält:

16

auf die Taktimpulse und die Zeitgabe/Datenimpulse ansprechende Zeitgabe- und Meßeinrichtungen (20, 31), die nach dem Empfang jedes n-ten dieser Zeitgabe/Datenimpulse einen ersten Code (CNT1—6; 31A) ausgeben, welcher die aktuelle Dauer des Zeitintervalls N zwischen dem n-ten Zeigabe/Datenimpuls und dem unmittelbar vorausgehenden Zeitgabe/Datenimpuls n-1 angibt, und ferner einen Aktivierungsimpuls (Load Out) liefert, welcher gegenüber dem empfangenen n-ten Zeitgabe/Datenimpuls in geeigneter Weise verzögert ist;

eine als Eingangssignal den erstgenannten Code empfangende Logikschaltung (32), welche am Ausgang ein erstes Steuersignal (NOM INT) auf einem ersten Pegel liefert, sofern sich die aktuelle Dauer des Intervalls N von einer vorgegebenen Normaldauer nicht mehr als um einen vorgegebenen Betrag unterscheidet;

eine Geschwindigkeitsfehler-Detektier- und Speichereinrichtung (34), welche am Eingang das erste Steuersignal (NOM INT) und die Aktivierungsimpulse (Load Out) empfängt und am Ausgang einen zweiten Code (Δ0—Δ4; 34A) liefert, der den Geschwindigkeitsfehler des magnetischen Trägers gegenüber einer Normalgeschwindigkeit anzeigt und auf den neuesten Stand gebracht wird, wenn das erste Steuersignal (NOM INT) für eine vorgegebene Anzahl aufeinanderfolgender Perioden zwischen Aktivierungsimpulsen (Load Out) auf dem ersten Pegel geblieben ist;

eine Geschwindigkeitsfehler-Korrektureinrichtung (32), welche am Eingang den ersten Code (CNT1—6; 31A) und den zweiten Code (Δ0—Δ4; 34A) erhält und am Ausgang einen dritten Code (SR1—5; 32A) liefert, der die hinsichtlich des durch den zweiten Code angegebenen Geschwindigkeitsfehlers des Trägers korrigierte Dauer des Intervalls N anzeigt;

eine Spitzenverschiebungs-Korrektureinrichtung (133) mit einem Umcodierspeicher (330), welcher an einer ersten Gruppe von Eingängen (I0—I4) den dritten Code (SR1—SR5; 32A) bezogen auf das Intervall und im Falle von MFM-Aufzeichnung aus an einer zweiten Gruppe (I5—I10) einen vierten Code (FB1—6) empfängt, der die Nenndauer mehrerer dem Intervall N unmittelbar vorausgehender Intervalle und auch die hinsichtlich der Geschwindigkeit zumindest des unmittelbar vorausgehenden Intervalls N-1 korrigierte und damit auch hinsichtlich der Spitzenverschiebung des (n-1)-ten Impulses korrigierte Dauer anzeigt, wobei die Spitzenverschiebungs-Korrektureinrichtung (330) an einer ersten Gruppe von Ausgängen einen fünften Code (A0, B0) liefert, welcher die dem Intervall N zugeordnete Nenndauer angibt, und an einer zweiten Gruppe von Ausgängen, zumindest im Fall der MFM-Datenaufzeichnung einen sechsten Code (PR1—6) ausgibt, welcher die dem Intervall N und wenigstens die dem vorangehenden Intervall N-1 zugeordnete Nenndauer sowie die hinsichtlich der Geschwindigkeit im Intervall N und damit auch hinsichtlich der Spitzenverschiebung des n-ten Impluses korrigierte Dauer anzeigt;

eine von den Aktivierungsimpulsen (Load Out) getaktete Verriegelungseinrichtung (331), die am Eingang vor einem der Aktivierungsimpulse den sechsten Code (PR1—6) empfängt und am Ausgang den sechsten Code als vierten Code (FB1—6) an die zweite Gruppe von Eingängen (I5—I10) liefert, sobald die durch einen der Aktivierungsimpulse (Load Out) weitergeschaltet wurde;

einen Fenster- und Signalgenerator (40), der als Eingangssignal den fünften Code (A0, B0; 33A) erhält und durch die Aktivierungsimpulse gesteuert wird und am Ausgang ein Fenstersignal (RD, CLK) mit einer Reihe von Halbwellen liefert, welche die Nenndauer des auf den fünften Code (A0, B0) bezogenen Intervalls angeben, und ferner den regenerierten Zeitgabe/Datenimpuls (RD DATA) liefert, der eine geeignete Impulsbeziehung zur letzten Halbwelle des Fensterssignals hat.

2. Digitalanordnung nach Anspruch 1, bei der die Logikschaltung und die Geschwindigkeitsfehler-Korrektureinrichtung (32) einen zweiten Umcodierspeicher (32a) enthalten, der vom ersten und zweiten Code (Δ0—Δ4; 34A) adressiert wird und am Ausgang das erste Steuersignal (NOM INT) und den dritten Code (SR1—5, 32A) liefert.

3. Digital anordnung nach Anspruch 1, bei der die Geschwindigkeitsfehler-Detektier- und Signalspeichervorrichtung (34) folgende Baugruppen umfaßt:

auf die Aktivierungsimpulse und das erste Steuersignal ansprechende Periodenzähler (340, 342), welche am Ausgang ein zweites Steuersignal eines ersten Pegels liefern, welches anzeigt, daß entweder das erste Steuersignal bis zum ersten Pegel angestiegen ist oder das erste Steuersignal den ersten Pegel für eine vorbestimmte Anzahl von Perioden zwischen Aktivierungsimpulse aufrechterhalten hat;

einen Periodendauerzähler (346, 347), der vom auf einem ersten Pegel befindlichen zweiten Steuersignal in einen vorgegebenen Zustand gesetzt und beim Empfang von Taktimpulsen forgeschaltet wird;

ein mit Eingängen an Ausgänge des Periodendauerzählers angeschlossenes Register (349), das von auf einem ersten Pegel befindlichen zweiten Steuersignal aktiviert wird, wobei dieses zweite Steuersignal anzeigt, daß das erste Steuersignal für die vorgegebenen Anzahl aufeinanderfolgender Perioden auf dem ersten Pegel geblieben ist, und wobei das Register zumindest den höchstwertigen Teil des vom Periodendauerzähler erreichten Zustandzählstands speichert und als zweiten Code am Ausgang des Registers zur Verfügung stellt.

4. Digitale Anordnung nach Anspruch 3, bei der die vorgegebene Anzahl aufeinanderfolgender Perioden gleich $2^P$ ist, mit P einer ganzen Zahl.

# EP 0 141 028 B1

**Revendications**

1. Dispositif numérique pour léire des données, les données étant enregistrées en modulation de fréquence MF ou en modulation de fréquence modifiée MFM sur un support magnétique se déplaçant à une vitesse voisine d'une vitesse nominale, le résultat de la lecture du support magnétique étant fourni en entrée du dispositif comme une suite d'impulsions de synchronisation/de données, chaque paire d'impulsions de synchronisation/de données successives identifiant un intervalle de temps variable, le dispositif étant déclenché par horloge au moyen d'impulsions d'horloge reçues d'un générateur d'impulsions d'horloge, comprenant:

un moyen de synchronisation et de mesure (20, 31) réagissant aux impulsions d'horloge et aux impulsions de synchronisation/de données, pour fournir en sortie, après réception de chaque $n^{ième}$ impulsion des impulsions de synchronisation/de données, un premier code (CNT1—6; 31A) indiquant la durée effective de l'intervalle de temps N entre l'impulsion de synchronisation/de données n et l'impulsion (n-1) qui la précède immédiatement parmi les impulsions de synchronisation/de données ainsi qu'une implusion de déclenchement (LOAD OUT) retardée de façon appropriée quant à la $n^{ième}$ impulsion de synchronisation/de données reçue,

un moyen logique (32) recevant en entrée le premier code et fournissant en sortie un premier signal de commande (NOM INT) à un premier niveau si la durée effective de l'intervalle N diffère d'une durée nominale préétablie de pas plus d'une quantité préétablie,

un moyen de détection et de mémorisation d'erreur de vitesse (34) recevant en entrée le premier signal de commande (NOM INT) et les impulsions de déclenchement (LOAD OUT), le moyen de détection et de mémorisation d'erreur de vitesse (34) fournissant en sortie un deuxième code ($\Delta0$—$\Delta4$; 34A) indiquant l'erreur de vitesse du support magnétique quant à une vitesse nominale, le deuxième code ($\Delta0$—$\Delta4$; 34A) étant mis à jour quand le premier signal de commande (NOM INT) a été au premier niveau pendant un nombre préétabli de périodes successives entre les impulsions de déclenchement (LOAD OUT),

un moyen de correction d'erreur de vitesse (32) recevant en entrée le premier (CNT 1—6; 31A) et le deuxième code ($\Delta0$—$\Delta4$; 34A) et fournissant en sortie un troisième code (SR 1—5; 32A) indiquant la durée de l'intervalle N corrigé quant à l'erreur de vitesse du support telle qu'indiquée par le deuxième code,

un moyen de correction de décalage de crête (33) incluant une mémoire de transcodage (330) et recevant à un premier groupe d'entrées ($I_0$—$I_4$) le troisième code (SR1—SR5; 32A) relatif à l'intervalle N et dans le cas d'un enregistrement de données MFM, recevant également à une deuxième groupe d'entrées ($I_5$—$I_{10}$) un quatrième code (FB1—6) indiquant la durée nominale d'un ensemble d'intervalles précédant immédiatement l'intervalle N, ainsi que la durée corrigée quant à la vitesse d'au moins l'intervalle (N-1) immédiatement précédent, donc du décalage de crête de la $(n-1)^{ième}$ des impulsions, le moyen de correction de décalage de crête (330) fournissant à un premier groupe de sorties un cinquième code ($A_0$, $B_0$) indiquant une durée nominale qui doit être associée à l'intervalle N et à un deuxième groupe de sorties, du moins dans le cas d'un enregistrement de données en MFM, un sixième code (PR1—6) indiquant la durée nominale associée à l'intervalle N et au moins à l'intervalle (N-1) précédent, ainsi que la durée corrigée quant à la vitesse de l'intervalle N, donc du décalage de crête de la $n^{ième}$ des impulsions,

un moyen de verrouillage (331) déclenché par horloge au moyen des impulsions de déclenchement (LOAD OUT) recevant en entrée le sixième code (PR1—6) avant une des impulsions de déclenchement et fournissant en sortie le sixième code comme quatrième code (FB1—6) au deuxième groupe d'entrées ($I_5$—$I_{10}$) après déclencement par ladite des impulsions de déclenchement (LOAD OUT),

un moyen générateur de fenêtres et de signaux (40) recevant en entrée le cinquième code ($A_0$, $B_0$; 33A) et déclenché par les impulsions de déclenchement, fournissant en sortie un signal de fenêtre (RD CLK) comportant un certain nombre d'alternances indiquant la durée nominale de l'intervalle relatif au cinquième code ($A_0$, $B_0$), et une impulsion de synchronisation/de données régénérées (RD DATA) comportant une relation d'impulsion appropriée avec la dernière alternance du signal de fenêtre.

2. Dispositif numérique selon la revendication 1, dans lequel le moyen logique et le moyen de correction d'erreur de vitesse (32) comprennent une deuxième mémoire de transcodage (320) adressée par les premier et deuxième codes ($\Delta0$—$\Delta4$; 34A) et délivrant en sortie le premier signal de commande (NOM INT) et le troisième code (SR1—5; 32A).

3. Dispositif numérique selon la revendication 1, dans lequel le moyen de détection et de mémorisation d'erreur de vitesse (34) comprend:

un moyen de comptage de périodes (340, 342) réagissant aux impulsions de déclenchement et au premier signal de commande, fournissant en sortie un deuxième signal de commande à un premier niveau, indiquant si ce premier signal de commande a augmenté jusqu'au premier niveau ou si le premier signal de commande est resté au premier niveau pendant un nombre prédéterminé de périodes successives entre les impulsions de déclenchement,

un compteur de durée de période (346, 347) mis dans un état préétabli par le deuxième signal de commande à un premier niveau, et progressant à la réception des impulsions d'horloge et,

un registre (349) ayant des entrées connectés aux sorties du compteur de durée de période et validé par le deuxième signal de commande à un premier niveau indiquant que le premier signal de commande est resté au premier niveau pendant le nombre préétablie de périodes successives, pour verrouiller au

18

moins la partie de poids fort du compte d'état atteint par le computeur de durée de période, la partie de poids fort étant fournie en sortie du registre comme deuxième code.

4. Dispositif numérique selon la revendication 3, dans lequel le nombre préétabli de périodes successives est égal à $2^P$, P étant un entier.

FIG. 1

FIG. 2

FIG. 3

FIG. 4

FIG. 5

EP 0 141 028 B1

FIG. 6

4

FIG. 7

FIG. 8

EP 0 141 028 B1

| | | DN$_{N-1}$=3, DN$_{N-2}$=2 | | | | | | | | DN$_{N-1}$=3, DN$_{N-2}$=3 | | | | | | | | | DN$_{N-1}$=3, DN$_{N-2}$=4 | | | | | | | |
|---|---|---|---|---|---|---|---|---|---|---|---|---|---|---|---|---|---|---|---|---|---|---|---|---|---|
| | | 2562.5 | 2625÷2687.5 | 2750÷2812.5 | 2875 | 3000 | 3062.5 | 3125÷3187.5 | 3250÷3437.5 | 2562.5÷2687.5 | 2750 | 2812.5 | 2875 | 2937.5÷3062.5 | 3125 | 3187.5 | 3250 | 3312.5÷3500 | 2562.5÷2750 | 2812.5÷2875 | 2937.5 | 3000 | 3062.5÷3125 | 3187.5÷3250 | 3312.5÷3375 | 3437.5 |
| | | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 |
| 2000 | 0 | 6 | 6 | 6 | 6 | 6 | 6 | 6 | 6 | 6 | 6 | 6 | 6 | 6 | 6 | 6 | 6 | 6 | 6 | 6 | 6 | 6 | 6 | 6 | 6 | 6 |
| 2062.5 | 1 | 6 | 6 | 6 | 6 | 6 | 6 | 6 | 6 | 6 | 6 | 6 | 6 | 6 | 6 | 6 | 6 | 6 | 6 | 6 | 6 | 6 | 6 | 6 | 6 | 6 |
| 2500 | 8 | 10 | 10 | 10 | 10 | 10 | 10 | 10 | 10 | 10 | 10 | 10 | 10 | 10 | 10 | 10 | 10 | 10 | 10 | 10 | 10 | 10 | 10 | 10 | 10 | 10 |
| 2562.5 | 9 | 10 | 10 | 10 | 10 | 28 | 28 | 28 | 28 | 10 | 10 | 10 | 10 | 28 | 28 | 28 | 28 | 28 | 10 | 10 | 10 | 10 | 28 | 28 | 28 | 28 |
| 2625 | 10 | 11 | 11 | 11 | 28 | 28 | 28 | 28 | 28 | 11 | 11 | 11 | 28 | 28 | 28 | 28 | 28 | 28 | 11 | 11 | 11 | 28 | 28 | 28 | 28 | 28 |
| 2687.5 | 11 | 11 | 11 | 28 | 28 | 28 | 28 | 28 | 28 | 11 | 11 | 28 | 28 | 28 | 28 | 28 | 28 | 28 | 11 | 11 | 28 | 28 | 28 | 28 | 28 | 28 |
| 2750 | 12 | 12 | 12 | 29 | 29 | 29 | 29 | 29 | 29 | 12 | 29 | 29 | 29 | 29 | 29 | 29 | 29 | 29 | 12 | 29 | 29 | 29 | 29 | 29 | 29 | 29 |
| 2812.5 | 13 | 30 | 30 | 30 | 30 | 30 | 30 | 30 | 30 | 30 | 30 | 30 | 30 | 30 | 30 | 30 | 30 | 30 | 30 | 30 | 30 | 30 | 30 | 30 | 30 | 30 |
| 3250 | 20 | 35 | 35 | 35 | 35 | 35 | 35 | 35 | 35 | 35 | 35 | 35 | 35 | 35 | 35 | 35 | 35 | 35 | 35 | 35 | 35 | 35 | 35 | 35 | 35 | 35 |
| 3312.5 | 21 | 36 | 36 | 36 | 36 | 36 | 36 | 36 | 52 | 36 | 36 | 36 | 36 | 36 | 36 | 36 | 36 | 52 | 36 | 36 | 36 | 36 | 36 | 36 | 36 | 52 |
| 3375 | 22 | 36 | 36 | 36 | 36 | 36 | 36 | 53 | 53 | 36 | 36 | 36 | 36 | 36 | 36 | 36 | 53 | 53 | 36 | 36 | 36 | 36 | 36 | 36 | 53 | 53 |
| 3437.5 | 23 | 36 | 36 | 36 | 36 | 36 | 53 | 53 | 53 | 36 | 36 | 36 | 36 | 36 | 36 | 53 | 53 | 53 | 36 | 36 | 36 | 36 | 36 | 53 | 53 | 53 |
| 3500 | 24 | 36 | 36 | 36 | 36 | 54 | 54 | 54 | 54 | 36 | 36 | 36 | 36 | 36 | 54 | 54 | 54 | 54 | 36 | 36 | 36 | 36 | 54 | 54 | 54 | 54 |
| 3562.5 | 25 | 54 | 54 | 54 | 54 | 54 | 54 | 54 | 54 | 54 | 54 | 54 | 54 | 54 | 54 | 54 | 54 | 54 | 54 | 54 | 54 | 54 | 54 | 54 | 54 | 54 |
| 3875 | 30 | 56 | 56 | 56 | 56 | 56 | 56 | 56 | 56 | 56 | 56 | 56 | 56 | 56 | 56 | 56 | 56 | 56 | 56 | 56 | 56 | 56 | 56 | 56 | 56 | 56 |
| 3937.5 | 31 | 57 | 57 | 57 | 57 | 57 | 57 | 57 | 57 | 57 | 57 | 57 | 57 | 57 | 57 | 57 | 57 | 57 | 57 | 57 | 57 | 57 | 57 | 57 | 57 | 57 |

A$_0$B$_0$=01 (2 μsec)

A$_0$B$_0$=10 (3 μsec)

A$_0$B$_0$=00 (4 μsec)

FIG. 9

EP 0 141 028 B1

| | | $DN_{N-1}=4, DN_{N-2}=2$ | | | | | | $DN_{N-1}=4, DN_{N-2}=3$ | | | | | | $DN_{N-1}=4, DN_{N-2}=4$ | | | | | | ← E |
|---|---|---|---|---|---|---|---|---|---|---|---|---|---|---|---|---|---|---|---|---|
| | | 3125÷3250 | 3312.5÷3375 | 3437.5÷3500 | 3562.5÷3625 | 3687.5÷3750 | 3812.5÷3875 | 3937.5 | 3312.5 | 3375÷3437.5 | 3500÷3562.5 | 3625÷3687.5 | 3750÷3875 | 3937.5 | 3500÷3562.5 | 3625 | 3687.5 | 3750 | 3812.5÷3875 | 3937.5 |
| | | 45 | 46 | 47 | 48 | 49 | 50 | 51 | 52 | 53 | 54 | 55 | 56 | 57 | 58 | 59 | 60 | 61 | 62 | 63 |
| 2000 | 0 | 13 | 13 | 13 | 13 | 13 | 13 | 13 | 13 | 13 | 13 | 13 | 13 | 13 | 13 | 13 | 13 | 13 | 13 | 13 |
| 2062.5 | 1 | 13 | 13 | 13 | 13 | 13 | 13 | 13 | 13 | 13 | 13 | 13 | 13 | 13 | 13 | 13 | 13 | 13 | 13 | 13 |
| 2500 | 8 | 17 | 17 | 17 | 17 | 17 | 17 | 17 | 17 | 17 | 17 | 17 | 17 | 17 | 17 | 17 | 17 | 17 | 17 | 17 |
| 2562.5 | 9 | 17 | 17 | 17 | 17 | 17 | 17 | 37 | 17 | 17 | 17 | 17 | 17 | 37 | 17 | 17 | 17 | 17 | 17 | 37 |
| 2625 | 10 | 18 | 18 | 18 | 18 | 18 | 37 | 37 | 18 | 18 | 18 | 18 | 18 | 37 | 18 | 18 | 18 | 18 | 18 | 37 |
| 2687.5 | 11 | 18 | 18 | 18 | 18 | 37 | 37 | 37 | 18 | 18 | 18 | 18 | 37 | 37 | 18 | 18 | 18 | 18 | 37 | 37 |
| 2750 | 12 | 19 | 19 | 19 | 37 | 37 | 37 | 37 | 19 | 19 | 19 | 37 | 37 | 37 | 19 | 19 | 19 | 37 | 37 | 37 |
| 2812.5 | 13 | 19 | 19 | 37 | 37 | 38 | 38 | 38 | 19 | 19 | 37 | 37 | 38 | 38 | 19 | 19 | 37 | 37 | 38 | 38 |
| 2875 | 14 | 19 | 37 | 37 | 38 | 38 | 38 | 38 | 19 | 37 | 37 | 38 | 38 | 38 | 19 | 37 | 37 | 38 | 38 | 38 |
| 2937.5 | 15 | 37 | 37 | 38 | 38 | 39 | 39 | 39 | 37 | 37 | 38 | 38 | 39 | 39 | 37 | 37 | 38 | 38 | 39 | 39 |
| 3375 | 22 | 41 | 42 | 42 | 43 | 43 | 43 | 43 | 41 | 42 | 42 | 43 | 43 | 43 | 41 | 42 | 42 | 43 | 43 | 43 |
| 3437.5 | 23 | 42 | 42 | 43 | 43 | 44 | 44 | 44 | 42 | 42 | 43 | 43 | 44 | 44 | 42 | 42 | 43 | 43 | 44 | 44 |
| 3500 | 24 | 42 | 43 | 43 | 44 | 44 | 58 | 58 | 42 | 43 | 43 | 44 | 58 | 58 | 42 | 43 | 43 | 44 | 44 | 58 |
| 3562.5 | 25 | 43 | 43 | 44 | 44 | 58 | 58 | 58 | 43 | 43 | 44 | 58 | 58 | 58 | 43 | 43 | 44 | 44 | 58 | 58 |
| 3625 | 26 | 59 | 59 | 59 | 59 | 59 | 59 | 59 | 59 | 59 | 59 | 59 | 59 | 59 | 43 | 44 | 44 | 59 | 59 | 59 |
| 3687.5 | 27 | 60 | 60 | 60 | 60 | 60 | 60 | 60 | 60 | 60 | 60 | 60 | 60 | 60 | 60 | 60 | 60 | 60 | 60 | 60 |
| 3875 | 30 | 62 | 62 | 62 | 62 | 62 | 62 | 62 | 62 | 62 | 62 | 62 | 62 | 62 | 62 | 62 | 62 | 62 | 62 | 62 |
| 3937.5 | 31 | 63 | 63 | 63 | 63 | 63 | 63 | 63 | 63 | 63 | 63 | 63 | 63 | 63 | 63 | 63 | 63 | 63 | 63 | 63 |

Right-side labels: $A_0B_0=01$ (2 μsec); $A_0B_0=10$ (3 μsec); $A_0B_0=00$ (4 μsec)

Arrows: A, B, C, D, E, F

FIG. 10

FIG. 11

EP 0 141 028 B1

FIG.12